# EUROPEAN PATENT APPLICATION

(11) **EP 4 700 222 A1**
(43) Date of publication of application: **25.02.2026**
(21) Application number: 25196435.9
(22) Date of filing: 18.08.2025
(51) Int. Cl.: F02D 31/00, F02D 11/10, F02D 41/00, F02D 29/02, F02B 61/02, F02D 41/02, F02D 9/02

(54) **VEHICLE AND CONTROL METHOD**

(30) Priority: 20.08.2024 JP 2024139275
(71) Applicant: Kawasaki Motors, Ltd., Akashi, Hyogo 673-8666 (JP)
(72) Inventor: MORITAKE, Toshiyuki, Akashi-shi, Hyogo, 673-8666 (JP)
(74) Representative: Witte, Weller & Partner Patentanwälte mbB

(57) **Abstract**

A vehicle (1) includes: a driving source (10); a rotation sensor (261) that detects a rotational speed of the driving source; control circuitry (30); and an actuator (40) that operates the driving source. When the rotational speed of the driving source has exceeded a preset upper threshold, the control circuitry executes suppression control that suppressed an output power of the driving source in comparison with before the rotational speed of the driving source exceeds the upper threshold. In the suppression control, the control circuitry gives to the actuator a command that makes the output power of the driving source suppressed in comparison with before the suppression control is executed, in accordance with an excess degree set in relation to an excess time period that is a time period in which the rotational speed of the driving source has exceeded the upper threshold.

## Description

### BACKGROUND ART

### FIELD OF THE INVENTION

The present invention relates to a vehicle and a control method each of which controls the rotational speed of a driving source.

### DESCRIPTION OF THE RELATED ART

For example, Japanese Laid-Open Patent Application Publication No. 2012-26286 discloses that the rotational speed of an engine is limited to a predetermined excessive rotational speed or less.

According to a limiting operation in Japanese Laid-Open Patent Application Publication No. 2012-26286, if output suppression of the engine is started when the rotational speed of the engine is around the excessive rotational speed, an output fluctuation width becomes large, and this deteriorates driving feeling of a vehicle. Moreover, if the output suppression of the engine is started when the rotational speed of the engine is lower than the excessive rotational speed, acceleration feeling of the vehicle deteriorates, and this deteriorates the driving feeling of the vehicle.

### SUMMARY OF THE INVENTION

An object of one aspect of the present invention is to provide a vehicle and a control method each of which prevents driving feeling of the vehicle from deteriorating while limiting an excessive rotational speed of a driving source of the vehicle.

A vehicle according to one aspect of the present invention includes: a driving source; a rotation sensor that detects a rotational speed of the driving source; control circuitry configured to control the driving source; and an actuator that operates the driving source in accordance with a command given from the control circuitry, wherein: in response to the rotational speed of the driving source exceeding a preset upper threshold, the control circuitry executes suppression control that suppresses an output power of the driving source in comparison with before the rotational speed of the driving source exceeds the upper threshold; and in the suppression control, the control circuitry gives to the actuator a command that makes the output power of the driving source suppressed in comparison with before the suppression control is executed, in accordance with an excess degree set in relation to an excess time period that is a time period in which the rotational speed of the driving source has exceeded the upper threshold.

### BRIEF DESCRIPTION OF THE DRAWINGS

FIG. 1 is a side view showing one example of the configuration of a vehicle according to an embodiment as a motorcycle;
FIG. 2 is a schematic diagram showing one example of a power system of the motorcycle of FIG. 1;
FIG. 3 is a table showing one example of a map of a relation between a reduction ratio and a count value of a positive rotational speed difference;
FIG. 4 is a table showing one example of a map of a relation between the reduction ratio and a count value of a negative rotational speed difference;
FIG. 5 is a flowchart showing one example of an operation of an ECU according to the embodiment;
FIG. 6 is a diagram showing Example 1 that is a control example in which when the motorcycle travels on a flat land, the ECU controls the rotational speed of an internal combustion engine;
FIG. 7 is a diagram showing Example 2 that is a control example in which when the motorcycle travels on an upslope, the ECU controls the rotational speed of the internal combustion engine; and
FIG. 8 is a diagram showing Example 3 that is a control example in which when the motorcycle travels on a downslope, the ECU controls the rotational speed of the internal combustion engine.

### DETAILED DESCRIPTION

Hereinafter, an exemplary embodiment of the present invention will be described with reference to the drawings. The embodiment described below is a generic or specific example. Some elements in the embodiment described below are not included in the appended independent claims that define the most generic concept of the present invention, and these elements are described as optional elements. The figures in the accompanying drawings are schematic diagrams, in which the elements are not necessarily precisely depicted. Elements that are substantially the same are denoted by the same reference signs throughout the drawings, and repeated descriptions of such elements may be omitted or simplified.

A vehicle 1 according to an exemplary embodiment will be described. In the present embodiment, the vehicle 1 is a motorcycle, i.e., a straddled vehicle including step bars 109 located lateral to a seat 107. The vehicle 1 is a lean vehicle that tilts while turning. Hereinafter, the "vehicle 1" may be referred to as a "motorcycle 1."

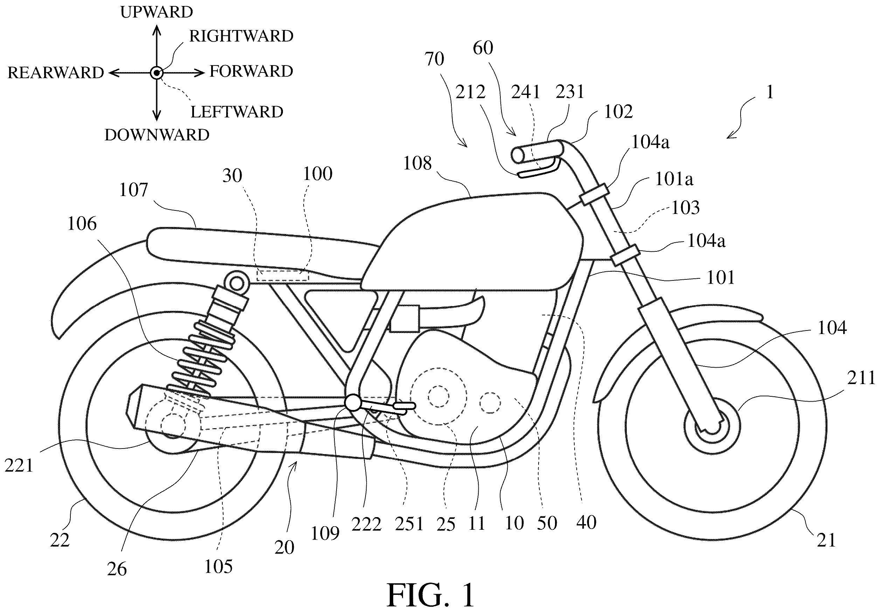

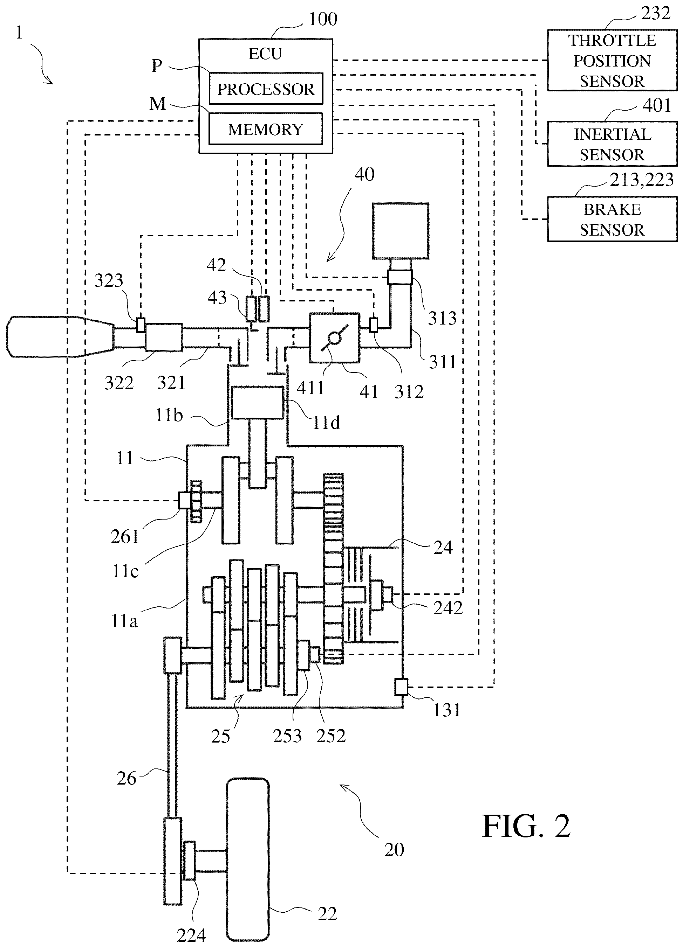

FIG. 1 is a side view showing one example of the configuration of the vehicle 1 according to the embodiment as the motorcycle. FIG. 2 is a schematic diagram showing one example of a power system of the motorcycle 1 of FIG. 1. As shown in FIGS. 1 and 2, the motorcycle 1 includes a driving source 10 and is structured to move by driving power generated by the driving source 10. The motorcycle 1 includes a driving structure 20, control circuitry 30, and an actuator 40. The driving structure 20 moves the vehicle 1 by being driven by the driving power transmitted from the driving source 10. The control circuitry 30 controls the driving source 10. The actuator 40 operates the driving source 10 in accordance with a command given from the control circuitry 30. The motorcycle 1 includes one or more state sensors 50 which detect the states of components of the motorcycle 1. The motorcycle 1 includes one or more manipulation elements 60 and one or more manipulation sensors 70. Each manipulation element 60 receives the manipulation of an operator, and each manipulation sensor 70 detects a manipulation amount of the manipulation element 60.

The motorcycle 1 includes a front wheel 21 and a rear wheel 22 each of which is part of the driving structure 20. Moreover, the motorcycle 1 includes a vehicle body frame 101, a handlebar 102, a steering shaft 103, a pair of left and right front forks 104, a swing arm 105, a rear suspension 106, the seat 107, a fuel tank 108, a pair of left and right step bars 109, and an electronic control unit 100. The "electronic control unit 100" may be referred to as an "ECU 100." The ECU 100 includes the control circuitry 30.

Upper portions of the front forks 104 are coupled to a pair of brackets 104a which are spaced from each other in the upward/downward direction, and lower portions of the front forks 104 rotatably support the front wheel 21. The brackets 104a are connected to the steering shaft 103 that supports the handlebar 102. The steering shaft 103 is supported by a head pipe 101a constituting a part of the vehicle body frame 101 and is angularly movable.

The swing arm 105 supports the rear wheel 22, extends in the forward/backward direction, and is pivotally supported by the vehicle body frame 101. The rear suspension 106 is connected to the swing arm 105 and the vehicle body frame 101. The fuel tank 108 that stores fuel of the driving source 10 is located at an upper portion of the vehicle body frame 101 and behind the handlebar 102. The seat 107, on which the operator is seated, is located at the upper portion of the vehicle body frame 101 and behind the fuel tank 108. The step bars 109 are attached to the vehicle body frame 101 so as to be located beside and under the seat 107.

In the present specification and the claims, the upward, downward, forward, backward, leftward, and rightward directions are those defined with respect to the vehicle 1 placed upright on a ground surface extending horizontally. The upward direction refers to the direction from the ground surface toward the vehicle 1, and the downward direction refers to the direction from the vehicle 1 toward the ground surface. The forward direction refers to the direction in which the vehicle 1 moves ahead. The backward, leftward, and rightward directions refer to those defined with respect to the operator sitting astride the vehicle 1 placed upright on the ground surface.

The motorcycle 1 further includes a front brake 211 located at the front wheel 21 and a rear brake 221 located at the rear wheel 22. As the manipulation elements 60, the motorcycle 1 includes a brake lever 212 located at the handlebar 102 and a brake pedal 222 located at the vehicle body frame 101. The motorcycle 1 is structured such that: the front brake 211 activates in response to the brake lever 212 being manipulated; and the rear brake 221 activates in response to the brake pedal 222 being manipulated. As the manipulation sensors 70, the motorcycle 1 includes a brake sensor 213 located at the brake lever 212 and a brake sensor 223 located the brake pedal 222. The brake sensors 213 and 223 detect brake manipulation. The brake sensors 213 and 223 output detection signals to the ECU 100. The brake pedal 222 may be located at the handlebar 102 as a brake lever.

As the manipulation element 60, the motorcycle 1 includes a throttle grip 231 located at the handlebar 102. The throttle grip 231 has a cylindrical shape and is rotatable about a cylinder axis. As the manipulation sensor 70, the motorcycle 1 includes a throttle position sensor 232 that detects an operation position of the throttle grip 231. The throttle position sensor 232 outputs a detection signal to the ECU 100. The ECU 100 controls the output power of the driving source 10 in accordance with the operation position and operation amount of the throttle grip 231. Examples of the throttle position sensor 232 may include an electromagnetic pick-up rotation sensor, an anisotropic-magneto-resistive (AMR) rotation sensor, a Hall IC rotation sensor, a mechanical encoder, an optical encoder, a magnetic encoder, and an electromagnetic induction encoder.

As the manipulation element 60, the motorcycle 1 may include a clutch lever 241 located at the handlebar 102. The motorcycle 1 is structured such that a below-described clutch 24 performs an engaging/disengaging operation in response to the clutch lever 241 being manipulated. As the manipulation sensor 70, the motorcycle 1 may include a clutch sensor 242 which is located at the clutch lever 241 or the clutch 24 and detects the engaging/disengaging operation of the clutch 24. For example, the clutch sensor 242 may detect the engaging operation and disengaging operation of the clutch 24. The clutch sensor 242 outputs a detection signal to the ECU 100.

As the manipulation element 60, the motorcycle 1 may include a shift operator 251. The shift operator 251 may be a shift pedal located at, for example, the vehicle body frame 101 or may be a shift button or a shift lever located at, for example, the handlebar 102. The motorcycle 1 is structured such that in response to the shift operator 251 being manipulated, a transmission 25 included in the motorcycle 1 changes a reduction ratio that is being selected. As the state sensor 50, the motorcycle 1 may include a gear position sensor 252. The gear position sensor 252 detects a command which is input to the shift operator 251 and specifies the reduction ratio of the transmission 25. Then, the gear position sensor 252 outputs a detection signal to the ECU 100.

The motorcycle 1 includes the driving source 10 to obtain propulsive force. The driving source 10 is located in a space which is located between the front wheel 21 and the rear wheel 22 and surrounded by the vehicle body frame 101. The driving source 10 is fixed to portions of the vehicle body frame 101. In the present embodiment, the driving source 10 includes an internal combustion engine 11, i.e., an ICE 11. As the driving structure 20, the motorcycle 1 may include the clutch 24, the transmission 25, and a power transmitting structure 26 by which the power generated by the internal combustion engine 11 is transmitted to the rear wheel 22. Examples of the power transmitting structure 26 may include a chain, a belt, and a gear.

As shown in FIG. 2, the internal combustion engine 11 includes: a crankshaft 11c located in a crankcase 11a; and one or more pistons 11d which are located in a cylinder block 11b so as to be slidable and are connected to the crankshaft 11c so as to be able to transmit the driving power to the crankshaft 11c.

The internal combustion engine 11 generates the power by repeating explosive combustion of a fuel-air mixture of the fuel and air in a cylinder of the cylinder block 11b. The internal combustion engine 11 converts explosive combustion-induced reciprocating motion of the piston 11d to rotational motion of the crankshaft 11c and transmits the rotational power of the crankshaft 11c to the rear wheel 22 that is a driving wheel. One of ends of the crankshaft 11c is connected to the clutch 24 and is further connected to an input shaft of the transmission 25 through the clutch 24 so as to be able to transmit the power to the input shaft. The clutch 24 is structured to establish or cuts power transmission between the crankshaft 11c and the transmission 25. In the present embodiment, the clutch 24 is mechanically connected to the clutch lever 241 and operates when manipulating force applied to the clutch lever 241 is physically transmitted to the clutch 24. An output shaft of the transmission 25 transmits the rotational power of the crankshaft 11c to the rear wheel 22 through the power transmitting structure 26.

As the state sensor 50, the motorcycle 1 includes a rotation sensor 261 that detects the rotational speed of the internal combustion engine 11. The rotational speed is correlated to the rotational frequency. The rotation sensor 261 may be located at a flywheel or crank pulley attached to an end portion of the crankshaft 11c so as to rotate integrally or may be located at, for example, a camshaft to which the rotational power of the crankshaft 11c is transmitted. The rotation sensor 261 outputs a detection result to the ECU 100. The ECU 100 determines the rotational speed of the crankshaft 11c by using the detection result of the rotation sensor 261. In this case, the rotation sensor 261 may be a sensor similar to that illustrated above for the throttle position sensor 232. The ECU 100 may serve as the rotation sensor 261 and may estimate the rotational speed of the internal combustion engine 11 based on a command value that controls the rotation of the internal combustion engine 11.

As the state sensor 50, the motorcycle 1 includes a wheel speed sensor 224 located at the rear wheel 22. The wheel speed sensor 224 detects the rotational speed of the rear wheel 22 and outputs a detection signal to the ECU 100. In this case, the wheel speed sensor 224 may be a sensor similar to that illustrated above for the throttle position sensor 232. The wheel speed sensor 224 may be located at the front wheel 21 and detect the rotational speed of the front wheel 21. The wheel speed sensor 224 or the ECU 100 may detect the speed of the motorcycle 1 from this rotational speed. The motorcycle 1 may include a position detection sensor which uses a global navigation satellite system (GNSS) that detects the position of the motorcycle 1 on the earth. In this case, the ECU 100 may detect the speed of the motorcycle 1 based on a time change of positional information acquired by the position detection sensor. As above, it is preferable that the motorcycle 1 include a sensor that detects a traveling speed.

As described above, the motorcycle 1 includes the ECU 100 and the actuator 40. The ECU 100 includes the control circuitry 30 that controls the internal combustion engine 11. The actuator 40 controls the internal combustion engine 11 in accordance with a command given from the ECU 100. As the actuator 40, the motorcycle 1 includes a throttle actuator 41, a fuel injection actuator 42, and an ignition actuator 43. The throttle actuator 41 drives a throttle valve 411 that adjusts the flow rate of air flowing into the cylinder block 11b. The fuel injection actuator 42 includes a fuel injection valve that injects the fuel into the cylinder block 11b. The ignition actuator 43 includes an ignition plug that ignites the fuel-air mixture, which is the mixture of the fuel and the air, in the cylinder block 11b.

The throttle actuator 41, the fuel injection actuator 42, and the ignition actuator 43 are controlled by the ECU 100. The ECU 100 adjusts the torque, which is output from the internal combustion engine 11, by controlling the actuator 40 in accordance with the detection signal of the sensor that detects a vehicle state of the motorcycle 1 among the sensors 50 and 70. For example, the ECU 100 may correct a target value of the torque of the internal combustion engine 11 based on the vehicle state. Examples of the vehicle state may include the rotational speed of the internal combustion engine 11, the reduction ratio that is being selected in the transmission 25, the vehicle speed of the motorcycle 1, an acceleration/deceleration state of the motorcycle 1, a bank angle of the motorcycle 1, the temperature of the internal combustion engine 11, and atmospheric pressure. The bank angle is an inclination angle of the motorcycle 1 that is turning. Examples of the temperature of the internal combustion engine 11 may include the temperature of cooling water of the internal combustion engine 11 and the temperature of lubricating oil of the internal combustion engine 11.

The ECU 100 may control the actuator 40 based on manipulation information given from the manipulation sensor 70 that detects the manipulation of the operator. The ECU 100 may control the actuator 40 based on vehicle information given from the state sensor 50 that detects the vehicle state. In the present embodiment, the ECU 100 controls the actuator 40 based on both of the manipulation information indicating the manipulation of the operator and the vehicle information indicating the vehicle state.

For example, the ECU 100 controls the operations of the throttle actuator 41, the fuel injection actuator 42, and the ignition actuator 43 based on the rotational speed of the internal combustion engine 11, the vehicle speed, the reduction ratio that is being selected in the transmission 25, and the like such that the internal combustion engine 11 generates the torque corresponding to the manipulation amount of the throttle grip 231 manipulated by the operator. More specifically, the ECU 100 calculates the torque required of the internal combustion engine 11 based on, for example, the operation amount of the throttle grip 231 which is detected by the throttle position sensor 232. Then, the ECU 100 determines a target opening degree of the throttle valve 411, a target fuel injection quantity of the fuel injection valve, and a target ignition timing of the ignition plug based on this torque and uses the result of the determination for the control of the actuator 40. In the present embodiment, the rotational speed of the internal combustion engine 11 is the rotational speed of the crankshaft 11c.

The motorcycle 1 may include: an intake passage 311 through which the air is introduced to the internal combustion engine 11; and an intake air temperature sensor 312 that detects an intake air temperature that is the temperature of the air flowing through the intake passage 311. The intake air temperature sensor 312 is one of the state sensors 50. The intake air temperature sensor 312 outputs a detection result to the ECU 100. The ECU 100 may control the actuator 40 by using the intake air temperature as the vehicle information. The intake passage 311 may be formed by an intake duct.

As the state sensor 50, the motorcycle 1 may include an intake air amount sensor 313 that detects the flow rate of the air flowing through the intake passage 311. The intake air amount sensor 313 outputs a detection result to the ECU 100. The ECU 100 may control the actuator 40 by using the flow rate of the air as the vehicle information. One example of the intake air amount sensor 313 is an airflow sensor. The function of the intake air amount sensor 313 may be realized by the ECU 100. In this case, the ECU 100 may detect the opening degree of the throttle valve 411 based on the operating state of the throttle actuator 41 and estimate the intake air amount based on the opening degree of the throttle valve 411.

The motorcycle 1 may include: an exhaust passage 321 through which an exhaust gas generated by the combustion of the fuel-air mixture in the internal combustion engine 11 is guided to the outside air; and a catalyst 322 located at a portion of the exhaust passage 321. The exhaust passage 321 may be formed by an exhaust pipe. The catalyst 322 has such a structure that a catalyst material including precious metal, such as platinum (Pt), rhodium (Rh), or palladium (Pd), is supported by a base body, such as a honeycomb body. The catalyst 322 purifies the exhaust gas which flows through the catalyst 322. As the state sensor 50, the motorcycle 1 may include a catalyst temperature sensor 323 that detects the temperature of the catalyst 322 or the temperature of a vicinity located downstream of the catalyst 322. The catalyst temperature sensor 323 outputs a detection result to the ECU 100. The ECU 100 may control the actuator 40 by using as the vehicle information the temperature detected by the catalyst temperature sensor 323.

As the state sensor 50, the motorcycle 1 may include an engine temperature sensor 131 that detects a temperature state of the internal combustion engine 11. One or more engine temperature sensors 131 may be located so as to detect the temperature of the cooling water that cools the internal combustion engine 11, the temperature of the lubricating oil that lubricates the inside of the internal combustion engine 11, or both of these temperatures. The engine temperature sensor 131 may be located at a passage for the cooling water or a passage for the lubricating oil. The engine temperature sensor 131 outputs a detection signal to the ECU 100. The ECU 100 may control the actuator 40 by using the temperature of the internal combustion engine 11 as the vehicle information.

The motorcycle 1 may include a transmission actuator 253 that controls the operation of the transmission 25. The transmission actuator 253 is controlled by the ECU 100. The ECU 100 causes the transmission actuator 253 to operate the transmission 25 in accordance with the detection signal of the gear position sensor 252 such that the reduction ratio of the transmission 25 becomes a command value. Or, the motorcycle 1 may be structured such that the transmission 25 is mechanically connected to the shift operator 251 and operates when the manipulating force applied to the shift operator 251 is physically transmitted to the transmission 25.

As the state sensor 50, the motorcycle 1 may include a sensor, such as an inertial sensor 401, which detects the attitude of the motorcycle 1. The inertial sensor 401 is used to detect the attitude of the motorcycle 1 and control the behavior of the motorcycle 1 and outputs a detection result to the ECU 100. The inertial sensor 401 includes an acceleration sensor and may further include a gyro sensor. The acceleration sensor detects accelerations in two or three detection axis directions intersecting with each other. The gyro sensor detects angular velocities or angular accelerations around two or three detection axes intersecting with each other. The ECU 100 may control the actuator 40 by using, as the vehicle information, the attitude of the motorcycle 1 and the state of the acceleration or deceleration of the motorcycle 1 which are based on the detection result of the inertial sensor 401.

Details of the configuration of the ECU 100 will be described. The ECU 100 may include a microcomputer including: one or more processors P, such as a CPU (Central Processing Unit) or a DSP (Digital Signal Processor); and one or more memories M. The control circuitry 30 may include the processor P and the memory M. The ECU 100 may include a clock that measures time. Examples of the memory M may include a semiconductor memory, a hard disc drive (HDD), and a solid state drive (SSD). Examples of the semiconductor memory may include a volatile memory, such as a RAM (Random Access Memory), and a non-volatile memory, such as a ROM (Read-Only Memory). The ECU 100 includes processing circuitry, and the control circuitry 30 includes processing circuitry.

At least one or all of the functions of the ECU 100 may be realized in such a manner that the CPU executes the program, which is stored in the ROM, by using the RAM as a working memory. At least one or all of the functions of the ECU 100 may be realized by special hardware circuitry, such as electronic circuitry or integrated circuitry. At least one or all of the functions of the ECU 100 may be realized by the combination of the above software function and the above hardware circuitry. Communication between devices, such as the ECU 100, various actuators, and various sensors, mounted on the motorcycle 1 may be communication through an in-vehicle network, such as a CAN (Controller Area Network).

The memory M of the ECU 100 prestores: a fuel map used to determine the target fuel injection quantity of the fuel injection valve; and an ignition map used to determine the target ignition timing of the ignition plug.

The fuel map is a map defined as a table prepared from a graph in which the target fuel injection quantity of the fuel injection valve is determined by the rotational speed of the internal combustion engine 11 and the load of the internal combustion engine 11. The fuel map may be set for each reduction ratio of the transmission 25. The ECU 100 determines the target fuel injection quantity by determining the load of the internal combustion engine 11 based on, for example, the detection signal of the throttle position sensor 232 and inputting the determined load and the rotational speed of the internal combustion engine 11 to the fuel map. The ECU 100 can determine the target fuel injection quantity by using the detection result of the rotation sensor 261, the detection result of the throttle position sensor 232, the detection result of the gear position sensor 252, and the fuel map. The ECU 100 may correct the target fuel injection quantity so as to increase or decrease the fuel injection quantity from the target fuel injection quantity based on one or more of the detection result of the wheel speed sensor 224, the detection result of the intake air temperature sensor 312, the detection result of the catalyst temperature sensor 323, the detection result of the engine temperature sensor 131, and the detection result of the clutch sensor 242.

The ignition map is a map defined as a table prepared from a graph in which the target ignition timing of the ignition plug is determined by the rotational speed of the internal combustion engine 11 and the opening degree of the throttle valve 411. The ignition map may be set for each reduction ratio of the transmission 25. The ECU 100 determines the target ignition timing by inputting the rotational speed of the internal combustion engine 11 and the opening degree of the throttle valve 411 to the ignition map. The ignition timing is a timing corresponding to a rotation angle of the crankshaft 11c. The ECU 100 may correct the target ignition timing so as to advance or retard the ignition timing from the target ignition timing based on one or more of the detection result of the wheel speed sensor 224, the detection result of the intake air temperature sensor 312, the detection result of the catalyst temperature sensor 323, the detection result of the engine temperature sensor 131, and the detection result of the clutch sensor 242.

The control of the rotational speed of the internal combustion engine 11 by the ECU 100 will be described. The ECU 100 stores a preset upper threshold Th1 of the rotational speed of the internal combustion engine 11 in the memory M. The upper threshold Th1 may be determined based on the structure and durability of the internal combustion engine 11 and the like. The upper threshold Th1 may be set to a value smaller than a limit threshold Th2 of the rotational speed of the internal combustion engine 11. The limit threshold Th2 may be determined based on the structure of the internal combustion engine 11. For example, the limit threshold Th2 may be determined as such a value that when the internal combustion engine 11 operates at a rotational speed higher than the limit threshold Th2, the internal combustion engine 11 breaks down, or the durability of the internal combustion engine 11 significantly deteriorates. The upper threshold Th1 may be set as an upper limit of the rotational speed which is allowed for the internal combustion engine 11 when the internal combustion engine 11 is normally used.

The upper threshold Th1 may be a revolution limit set for the internal combustion engine 11. A range between the upper threshold Th1 and the limit threshold Th2 may be defined as a red zone. As the rotational speed of the internal combustion engine 11 approaches the limit threshold Th2 beyond the upper threshold Th1, the risk of the break-down and durability deterioration of the internal combustion engine 11 may increase. As a time period in which the rotational speed of the internal combustion engine 11 is kept in the red zone increases, the risk of the break-down and durability deterioration of the internal combustion engine 11 may increase.

The upper threshold Th1 may be set to a constant value regardless of the state of the motorcycle 1 or may be set to a value that changes in accordance with the vehicle state of the motorcycle 1. In the latter case, examples of the vehicle state of the motorcycle 1 may include the vehicle speed of the motorcycle 1, the reduction ratio that is being selected in the transmission 25, and the temperature of the internal combustion engine 11.

The ECU 100 detects the rotational speed of the internal combustion engine 11 based on the detection result of the rotation sensor 261. In response to the ECU 100 determining that the rotational speed of the internal combustion engine 11 has started exceeding the upper threshold Th1, the ECU 100 starts the execution of suppression algorithm that prevents the rotational speed of the internal combustion engine 11 from reaching the limit threshold Th2. Starting exceeding the upper threshold Th1 denotes that, in a state in which the suppression algorithm is not being executed, the rotational speed of the internal combustion engine 11 first exceeds the upper threshold Th1.

In the suppression algorithm, in response to the ECU 100 determining that a suppression condition has been satisfied, the ECU 100 executes suppression control that suppresses the output power to be output from the internal combustion engine 11. In other words, by executing the suppression control, the ECU 100 suppresses an increase in the rotational speed of the internal combustion engine 11 and lowers the rotational speed. The suppression control is control of the actuator 40 by which the rotational speed of the internal combustion engine 11 is prevented from reaching the limit threshold Th2 and is quickly lowered to the upper threshold Th1 or less. The suppression condition is a condition based on a below-described excess degree.

The output power of the internal combustion engine 11 may be defined based on the torque and rotational speed of the internal combustion engine 11. For example, a target output power of the internal combustion engine 11 may be determined based on the target torque of the internal combustion engine 11 and the rotational speed of the internal combustion engine 11. The target torque is the torque of the internal combustion engine 11 which is realized by the target fuel injection quantity determined by using the fuel map and the target ignition timing determined by using the ignition map. The ECU 100 may suppress the output power of the internal combustion engine 11 by suppressing the output torque of the internal combustion engine 11 to be lower than the target torque. The ECU 100 determines the target opening degree of the throttle valve 411 and the target fuel injection quantity of the fuel injection valve which correspond to the suppressed target torque and uses the determination result for the control of the actuator 40.

When the ECU 100 starts the suppression algorithm, the ECU 100 determines an excess degree E of the rotational speed of the internal combustion engine 11 with respect to the upper threshold Th1. The excess degree E is set in relation to an excess time period that is a time period in which the rotational speed of the internal combustion engine 11 has exceeded the upper threshold Th1. The ECU 100 determines an output power suppression amount of the internal combustion engine 11 by using the excess degree E. The output power suppression amount is a suppressed amount that is reduced from the target output power of the internal combustion engine 11. The ECU 100 outputs a suppression command corresponding to the output power suppression amount.

Processing of determining the excess degree E by the ECU 100 will be described. The excess degree E is an index related to an occurring state of an exceeding phenomenon that is a phenomenon in which the rotational speed of the internal combustion engine 11 exceeds the upper threshold Th1. Examples of the occurring state of the exceeding phenomenon may include a time period of the occurrence of the exceeding phenomenon, the number of times of the occurrence of the exceeding phenomenon, and the frequency of the occurrence of the exceeding phenomenon.

In the present embodiment, the occurring state of the exceeding phenomenon is a time period in which the exceeding phenomenon has occurred. To be specific, the excess degree E is related to the excess time period that is a time period in which the rotational speed of the internal combustion engine 11 has exceeded the upper threshold Th1. The excess time period may be one time period in which the rotational speed of the internal combustion engine 11 has continuously exceeded the upper threshold Th1 or may be the total of time periods in each of which the rotational speed of the internal combustion engine 11 has continuously exceeded the upper threshold Th1. In the present embodiment, the excess time period is the total of the time periods in each of which the rotational speed of the internal combustion engine 11 has continuously exceeded the upper threshold Th1 in a determination time period that is a time period from a start timing of the suppression algorithm until a timing at which the excess degree E is calculated.

The excess degree E may be an index that changes in accordance with the length of the excess time period. In this case, the value of the excess degree E is a value that increases as the excess time period increases, i.e., a value corresponding to the length of the excess time period. The excess degree E may be an index that changes in accordance with a change of a combination of the excess time period and other factors. Examples of such factors may include the rotational speed of the internal combustion engine 11, the length of a non-excess time period, and the reduction ratio that is being selected in the transmission 25. In the present embodiment, such factors include the rotational speed of the internal combustion engine 11, the length of the non-excess time period, and the reduction ratio that is being selected in the transmission 25.

The non-excess time period is a time period in which the rotational speed of the internal combustion engine 11 is the upper threshold Th1 or less. The non-excess time period may be one time period in which the rotational speed of the internal combustion engine 11 is continuously the upper threshold Th1 or less or may be the total of time periods in each of which the rotational speed of the internal combustion engine 11 is continuously the upper threshold Th1 or less. In the present embodiment, the non-excess time period is the total of the time periods in each of which the rotational speed of the internal combustion engine 11 is continuously the upper threshold Th1 or less in the determination time period that is a time period from the start timing of the suppression algorithm until the timing at which the excess degree E is calculated.

The value of the excess degree E changes in accordance with a change of a combination of the excess time period and an excess part of the rotational speed of the internal combustion engine 11 with respect to the upper threshold Th1. The value of the excess degree E changes in accordance with the length of the excess time period and a change in the rotational speed of the internal combustion engine 11 in the excess time period. For example, the value of the excess degree E increases as the excess time period increases. Moreover, the value of the excess degree E increases as the excess part of the rotational speed of the internal combustion engine 11 increases. In the present embodiment, the value of the excess degree E is increased at a certain rate in accordance with the excess part of the rotational speed of the internal combustion engine 11. Specifically, the value of the excess degree E is increased at a certain rate every predetermined time period in accordance with the excess part of the rotational speed of the internal combustion engine 11 which is acquired every predetermined time period.

Moreover, the value of the excess degree E changes in accordance with a change of a combination of the non-excess time period and a deficient part of the rotational speed of the internal combustion engine 11 with respect to the upper threshold Th1. The value of the excess degree E changes in accordance with the length of the non-excess time period and a change in the rotational speed of the internal combustion engine 11 in the non-excess time period. For example, the value of the excess degree E decreases as the non-excess time period increases. Moreover, the value of the excess degree E decreases as the deficient part of the rotational speed of the internal combustion engine 11 increases. In the present embodiment, the value of the excess degree E is decreased at a certain rate in accordance with the deficient part of the rotational speed of the internal combustion engine 11. Specifically, the value of the excess degree E is decreased at a certain rate every predetermined time period in accordance with the deficient part of the rotational speed of the internal combustion engine 11 which is acquired every predetermined time period.

Moreover, the value of the excess degree E changes in accordance with the reduction ratio that is being selected in the transmission 25. For example, the value of the excess degree E may change such that the value of the excess degree E when a high reduction ratio is being selected, i.e., when a reduction ratio for so-called low-speed traveling is being selected becomes larger than the value of the excess degree E when a low reduction ratio is being selected, i.e., when a reduction ratio for so-called high-speed traveling is being selected. The excess degree E may change so as to increase as the reduction ratio becomes higher. In the present embodiment, the value of the excess degree E is increased or decreased at a certain rate in accordance with the reduction ratio that is being selected in the transmission 25.

In the present embodiment, the excess degree E is represented by using a count value added every predetermined sampling time period Ps. However, the excess degree E is not limited to this. In each sampling time period Ps, the ECU 100 determines the count value corresponding to a rotational speed difference that is a difference obtained by subtracting the upper threshold Th1 from the rotational speed of the internal combustion engine 11. The count value corresponds to the excess part or the deficient part. The ECU 100 adds, i.e., counts up the determined count values in the respective sampling time periods Ps. The total value of the count values corresponds to the excess degree E. **In** the present embodiment, the excess degree E is the total value of the count values. The count value is an excess degree element constituting the excess degree. For example, the sampling time period Ps may be set to a time period that is one second or less.

**In** the present embodiment, ranges are set for the rotational speed difference, and different values as the count values are set in the respective ranges for the rotational speed differences. The count value is set to a larger value in the range in which the rotational speed difference is larger. When the rotational speed difference is a positive value, the count value is a positive value, and the excess degree E increases by counting-up. Such count value is adopted in the excess time period. When the rotational speed difference is a negative value, the count value is a negative value, and the excess degree E decreases by counting-up. Such count value may be adopted in the non-excess time period. When the rotational speed difference is zero, the count value is zero or a negative value, and in the present embodiment, the count value is a negative value. Such count value is adopted in the non-excess time period. **In** the present embodiment, the ECU 100 adds not only the positive count value but also the negative count value to the excess degree.

For example, the count value may be increased by a predetermined number, such as one, each time the rotational speed difference increases by 100 rpm (rotations per minute) such that: the count value is one when the rotational speed difference is in a range of more than zero and not more than 100 rpm; and the count value is two when the rotational speed difference is in a range of more than 100 rpm and not more than 200 rpm. For example, the count value may be decreased by a predetermined number, such as one, each time the rotational speed difference decreases by 100 rpm such that: the count value is -1 when the rotational speed difference is in a range of not less than -100 rpm and less than zero; and the count value is -2 when the rotational speed difference is in a range of not less than -200 rpm and not more than -100 rpm. **In the** present embodiment, when absolute value of the range for the positive rotational speed difference and absolute value of the range for the negative rotational speed difference are the same as each other, the absolute values of the count values in those ranges are the same as each other. When the rotational speed difference is zero, the count value may be zero or -1, and in the present embodiment, the count value is -1.

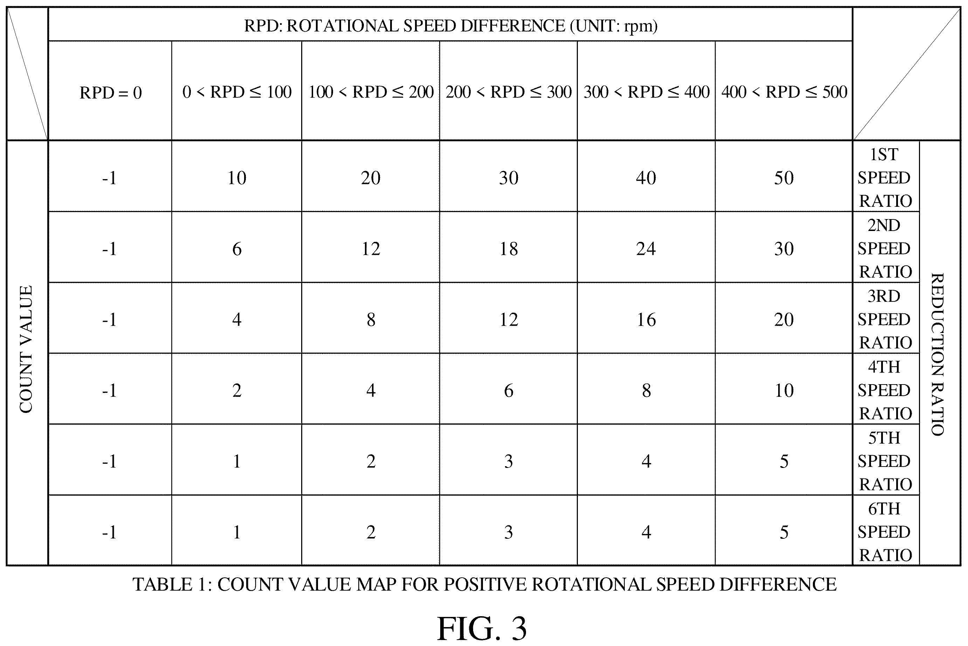

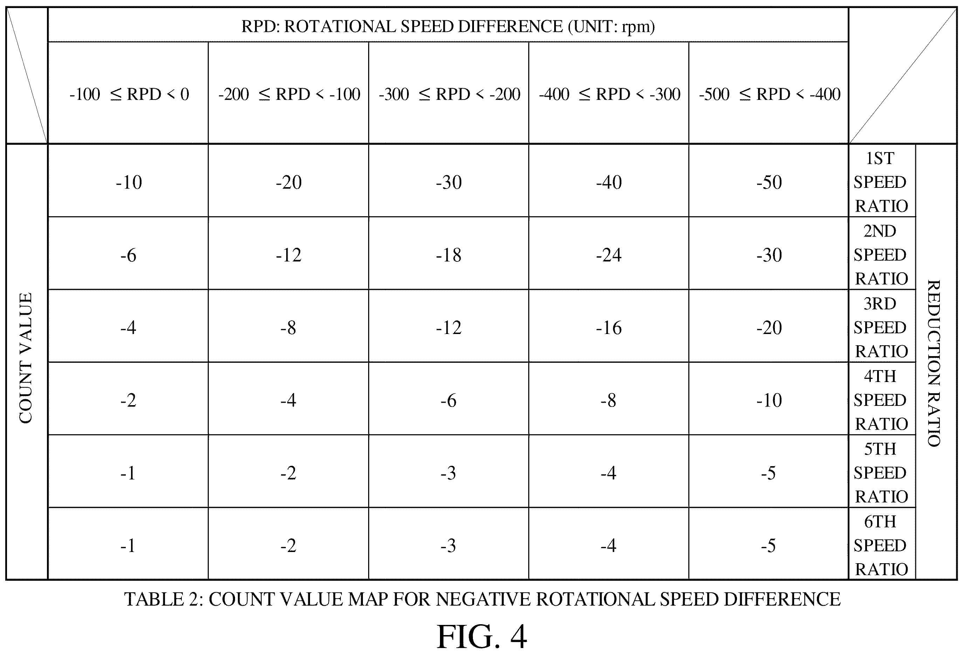

In the present embodiment, the count values corresponding to the same range for the rotational speed difference are set so as to be different from each other in accordance with the reduction ratios selected in the transmission 25. The count values corresponding to the same range for the rotational speed difference may be the same as each other among two or more reduction ratios. For example, change amounts of the count values, which change for every 100 rpm of the rotational speed difference, at a high reduction ratio, i.e., a reduction ratio for so-called low-speed traveling may be larger than change amounts of the count values, which change for every 100 rpm of the rotational speed difference, at a low reduction ratio, i.e., a reduction ratio for so-called high-speed traveling. In the case of the same rotational speed differences, as the reduction ratio becomes higher, change amounts of the count values, which correspond to the same rotational speed differences among the rotational speed differences of every 100 rpm, increase. Specifically, as the reduction ratio becomes higher, the count values corresponding to the same range for the rotational speed difference are increased at certain rates so as to become larger. For example, a relation among the reduction ratios, the ranges for the rotational speed differences, and the change ratios of the count values among the ranges for the rotational speed differences can be set as shown by Table 1 in FIG. 3 and Table 2 in FIG. 4. FIG. 3 is a table showing one example of a map of a relation between the reduction ratio and the count value of the positive rotational speed difference. FIG. 4 is a table showing one example of a map of a relation between the reduction ratio and the count value of the negative rotational speed difference. In the examples of Tables 1 and 2, six reduction ratios are selectable in the transmission 25.

The ECU 100 prestores in the memory M a relation between the range of the rotational speed difference and the count value or a relation among the range of the rotational speed difference, the reduction ratio of the transmission 25, and the count value.

In response to the ECU 100 determining that the rotational speed of the internal combustion engine 11 has started exceeding the upper threshold Th1, the ECU 100 executes the suppression algorithm and starts calculating the excess degree E. Each time the sampling time period Ps elapses, the ECU 100 detects the rotational speed difference obtained by subtracting the upper threshold Th1 from the rotational speed of the internal combustion engine 11, counts up the count values corresponding to the rotational speed differences, and determines the total value of the count values. The ECU 100 determines the value of the excess degree E which corresponds to the total value of the count values. The ECU 100 may add the count value to a preset initial value. The initial value may be zero or may be more than zero. In the present embodiment, the initial value is set so as to vary in accordance with the reduction ratio selected in the transmission 25. The initial values for two or more reduction ratios may be the same as each other. The initial value may increase as the reduction ratio selected in the transmission 25 becomes higher.

The ECU 100 continues to calculate the excess degree E until a preset stop condition is satisfied. In response to ECU 100 determining that the stop condition has been satisfied, the ECU 100 cancels the execution of the suppression algorithm and resets the value of the excess degree E to the initial value. The stop condition will be described later.

In response to the ECU 100 determining in the process of calculating the excess degree E that the suppression condition is satisfied, the ECU 100 executes the suppression control that suppresses the output power to be output from the internal combustion engine 11. The suppression condition is a condition that the value of the excess degree E is more than the initial value.

In the suppression control, the ECU 100 outputs to the actuator 40 the suppression command that makes the output power to be output from the internal combustion engine 11 suppressed in comparison with before the suppression control. One example of the control before the suppression control is normal control. The normal control is control in which the target fuel injection quantity which corresponds to the fuel map or has been corrected based on the detection results of various sensors and the ignition timing which corresponds to the ignition map or has been corrected based on the detection results of various sensors are applied to the actuator 40. The suppression command is a command for making the output power to be output from the internal combustion engine 11 suppressed in comparison with the target output power of the internal combustion engine 11. In response to the ECU 100 determining that the stop condition has been satisfied, the ECU 100 stops the suppression control and shifts to the normal control or the like.

Processing of determining the output power suppression amount of the internal combustion engine 11 by the ECU 100 will be described. In the suppression control, the ECU 100 controls the actuator 40 such that the output power suppression amount increases as the excess degree E increases. When the positive count values are counted up, the excess degree E becomes large, and therefore, the output power suppression amount becomes large. When the negative count values are counted up, the excess degree E becomes small, and therefore, the output power suppression amount becomes small.

The ECU 100 determines an output power suppression amount PS of the internal combustion engine 11 based on the excess degree E and a target output power PT. The target output power PT is a target output power of the internal combustion engine 11 in the normal control. The output power suppression amount PS is calculated by a formula "PS = PT × αE." In this formula, α is a coefficient.

In the present embodiment, the coefficient α is a reciprocal number of a maximum excess degree Emax that is a maximum allowable value set for the excess degree. For example, the ECU 100 prestores the maximum excess degree Emax in the memory M. The maximum excess degree Emax is set in accordance with the vehicle state of the motorcycle 1. Examples of the vehicle state may include the reduction ratio set in the transmission 25, the vehicle speed of the motorcycle 1, the intake pressure of the internal combustion engine 11, the intake air temperature of the internal combustion engine 11, and the attitude of the motorcycle 1.

The ECU 100 determines the output power suppression amount PS of the internal combustion engine 11 based on a ratio R of the excess degree E to the maximum excess degree Emax. To be specific, a formula "PS = PT × R" is established. In the present embodiment, the ECU 100 determines a target suppressed output power PST, which is a target output power after the output power being suppressed, by multiplying the target output power PT by (1 - the ratio R). To be specific, a formula "PST = PT × (1 - R)" is established. For each sampling time period Ps, the ECU 100 determines the ratio R of the excess degree E to the maximum excess degree Emax and the target output power PT of the internal combustion engine 11, and then, determines the target suppressed output power PST based on the ratio R and the target output power PT.

The excess degree E increases as the excess time period increases. Therefore, the output power suppression amount PS increases as the excess time period increases. An increase amount of the output power suppression amount PS for each sampling time period Ps in the excess time period depends on the rotational speed difference and the sampling time period Ps. Therefore, a time change of the output power suppression amount PS is more moderate than that when, for example, the output power suppression amount PS changes sequentially in accordance with a change in the rotational speed of the internal combustion engine 11. Moreover, the output power suppression amount PS decreases as the non-excess time period increases. A decrease amount of the output power suppression amount PS for each sampling time period Ps in the non-excess time period depends on the rotational speed difference and the sampling time period Ps. Therefore, a time change of the output power suppression amount PS is more moderate than that when, for example, the output power suppression amount PS changes sequentially in accordance with a change in the rotational speed of the internal combustion engine 11. Therefore, in both of the excess time period and the non-excess time period, the behavior of the internal combustion engine 11 is moderate.

In the present embodiment, the ECU 100 determines the maximum excess degree Emax corresponding to the vehicle state of the motorcycle 1, i.e., the maximum excess degree Emax corresponding to, for example, any of the reduction ratio set in the transmission 25, the vehicle speed of the motorcycle 1, the intake pressure of the internal combustion engine 11, the intake air temperature of the internal combustion engine 11, and the attitude of the motorcycle 1. Furthermore, the ECU 100 may correct the determined maximum excess degree Emax by using the vehicle state different from the vehicle state used to determine the maximum excess degree Emax.

In the present embodiment, the ECU 100 determines a maximum excess degree Emax1 corresponding to the reduction ratio that is being selected in the transmission 25. For example, the ECU 100 determines the maximum excess degree Emax1 based on the detection result of the gear position sensor 252. The maximum excess degrees Emax1 are preset for respective reduction ratios set in the transmission 25 and are stored in the memory M of the ECU 100. The maximum excess degree Emax1 when the reduction ratio is high is smaller than the maximum excess degree Emax1 when the reduction ratio is low. For example, the maximum excess degree Emax1 is set so as to decrease as the reduction ratio shifts from the reduction ratio for high-speed traveling toward the reduction ratio for low-speed traveling.

As the maximum excess degree Emax1 increases, the output power suppression amount PS may decrease, and the target suppressed output power PST may increase. Therefore, as the reduction ratio that is being selected in the transmission 25 shifts from the reduction ratio for low-speed traveling toward the reduction ratio for high-speed traveling, i.e., as the reduction ratio becomes smaller, the output power suppression amount PS decreases.

In the present embodiment, the ECU 100 corrects the maximum excess degree Emax1 corresponding to the reduction ratio based on one or more of the vehicle speed of the motorcycle 1, the intake pressure of the internal combustion engine 11, the intake air temperature of the internal combustion engine 11, and the attitude of the motorcycle 1.

The ECU 100 may correct the maximum excess degree Emax1 based on the detection result of the wheel speed sensor 224 to obtain a maximum excess degree Emax2. The maximum excess degree Emax2 when the vehicle speed is high may be larger than the maximum excess degree Emax2 when the vehicle speed is low. For example, the ECU 100 may correct the maximum excess degree Emax1 such that the maximum excess degree Emax2 decreases as the vehicle speed shifts from a high speed toward a low speed. Thus, as the vehicle speed shifts from the low speed toward the high speed, the output power suppression amount PS decreases.

The ECU 100 may correct the maximum excess degree Emax1 based on the detection result of the intake air amount sensor 313 to obtain a maximum excess degree Emax3. The ECU 100 may estimate the intake pressure of the internal combustion engine 11 based on the intake air amount detected by the intake air amount sensor 313. The ECU 100 may estimate the intake air amount based on the opening degree of the throttle valve 411. The maximum excess degree Emax3 when the intake pressure is high may be larger than the maximum excess degree Emax3 when the intake pressure is low. For example, the ECU 100 may correct the maximum excess degree Emax1 such that the maximum excess degree Emax3 decreases as the intake pressure shifts from a high pressure level toward a low pressure level. Thus, the output power suppression amount PS decreases as the intake pressure shifts from the low pressure level toward the high pressure level.

The ECU 100 may correct the maximum excess degree Emax1 based on the detection result of the intake air temperature sensor 312 to obtain a maximum excess degree Emax4. The maximum excess degree Emax4 when the intake air temperature is low may be larger than the maximum excess degree Emax4 when the intake air temperature is high. For example, the ECU 100 may correct the maximum excess degree Emax1 such that the maximum excess degree Emax4 decreases as the intake air temperature shifts from a low temperature level toward a high temperature level. Thus, the output power suppression amount PS decreases as the intake air temperature shifts from the high temperature level toward the low temperature level.

The ECU 100 may correct the maximum excess degree Emax1 based on the detection result of the inertial sensor 401 to obtain a maximum excess degree Emax5. The ECU 100 detects the attitude of the motorcycle 1 based on the detection result of the inertial sensor 401. The maximum excess degree Emax5 when an inclination amount of the motorcycle 1 in the leftward/rightward direction is small may be larger than the maximum excess degree Emax5 when the inclination amount of the motorcycle 1 in the leftward/rightward direction is large. For example, the ECU 100 may correct the maximum excess degree Emax1 such that the maximum excess degree Emax5 decreases as the inclination amount of the motorcycle 1 in the leftward/rightward direction shifts from a small inclination amount toward a large inclination amount. Thus, the output power suppression amount PS decreases as the inclination amount of the motorcycle 1 in the leftward/rightward direction shifts from the large inclination amount toward the small inclination amount.

The ECU 100 may correct the maximum excess degree Emax1 by the combination of two or more types of correction processing of the maximum excess degrees Emax2 to Emax5.

Based on the target suppressed output power PST calculated as above, the ECU 100 outputs to the actuator 40 the suppression command that changes the target output power of the internal combustion engine 11 to the target suppressed output power PST. The suppression command includes one or more of an ignition cut command, a fuel cut command, a fuel reduction command, a retard command, and an intake reduction command, which are described below.

The ignition cut command is a command that stops the ignition of the ignition plug at the target ignition timing. The ignition cut command is output by the ECU 100 to the ignition actuator 43. Since the internal combustion engine 11 temporarily stops the output by the stop of the ignition, the internal combustion engine 11 can suppress the output torque.

The fuel cut command is a command that stops the fuel injection from the fuel injection valve. The fuel cut command is output by the ECU 100 to the fuel injection actuator 42. Since the internal combustion engine 11 temporarily stops the output by the stop of the fuel injection, the internal combustion engine 11 can suppress the output torque.

The fuel reduction command is a command that makes the fuel injection quantity of the fuel injection valve smaller than the target fuel injection quantity. The fuel reduction command is output by the ECU 100 to the fuel injection actuator 42. Since the fuel injection quantity decreases, the internal combustion engine 11 can suppress the output torque.

The retard command is a command that delays, i.e., retards the ignition timing of the ignition plug more than the target ignition timing. The retard command is output by the ECU 100 to the ignition actuator 43. Since the internal combustion engine 11 cannot obtain efficient combustion and explosion due to the retarding of the ignition timing, the internal combustion engine 11 can suppress the output torque.

The intake reduction command is a command that makes the opening degree of the throttle valve 411 smaller than the opening degree corresponding to the detection signal of a throttle position sensor 232. The intake reduction command is output by the ECU 100 to the throttle actuator 41. The internal combustion engine 11 can suppress the output torque by the decrease in the intake air amount.

The stop condition will be described. The stop condition is preset so as to include conditions. When any one of the conditions of the stop condition is satisfied, the ECU 100 stops the suppression control or the suppression algorithm. Thus, the opportunity of the suppression control can be easily reduced, and therefore, the opportunity in which the operator of the motorcycle 1 feels the deterioration of the driving feeling by the suppression control can be reduced. For example, the stop condition includes first to sixth conditions, and the ECU 100 prestores the stop condition including the first to sixth conditions in the memory M. In response to the ECU 100 determining that one or more of the first to sixth conditions have been satisfied, the ECU 100 determines that the stop condition has been satisfied. Then, the ECU 100 stops the suppression control or the suppression algorithm. Stopping the suppression control may denote terminating the suppression control without terminating the suppression algorithm, may denote terminating the suppression algorithm and the suppression control, or may denote temporarily stopping the suppression control without terminating the suppression algorithm. Stopping the suppression algorithm denotes terminating the suppression algorithm. Accordingly, the suppression control is terminated. In the present embodiment, stopping the suppression control denotes terminating the suppression algorithm, and the excess degree is reset to the initial value.

The first condition is a condition that after the suppression control is started, the total value of the count values converges to the initial value. In a state where the first condition is satisfied, an influence by the excessive rotation of the internal combustion engine 11 is small, and therefore, it is preferable to stop the suppression control.

The second condition is a condition that after a time point at which the rotational speed of the internal combustion engine 11 has exceeded the upper threshold Th1, the length of a less-than time period that is a time period in which the rotational speed is less than the upper threshold Th1 becomes a preset threshold or more. In a state where the second condition is satisfied, the influence by the excessive rotation of the internal combustion engine 11 is small as with the first condition, and therefore, it is preferable to stop the suppression control.

The third condition is a condition that the rotational speed of the internal combustion engine 11 becomes a preset lower threshold or less. The lower threshold is less than the upper threshold Th1. The lower threshold may be set to such a rotational speed that a large amount of time may be required for the rotational speed to reach the upper threshold Th1 again under the suppression control. Therefore, it is preferable to stop the suppression control. For example, the lower threshold is preferably a rotational speed that is 70% or less of the upper threshold Th1, more preferably a rotational speed that is 60% or less of the upper threshold Th1, and further preferably a rotational speed that is 50% or less of the upper threshold Th1. The lower threshold is preferably a rotational speed that is 40% or more of the upper threshold Th1. In the present embodiment, the lower threshold is set within a range of 45% or more and 55% or less of the upper threshold Th1.

The fourth condition is a condition that the detection result of the clutch sensor 242 indicates that the clutch 24 has shifted from the engaged state to the disengaged state. In a state where the fourth condition is satisfied, it is preferable to stop the suppression control that is being executed, in order to attach importance to the driving feeling of the operator, and due to the load acting on the internal combustion engine 11 significantly decreasing.

The fifth condition is a condition that the detection result of the gear position sensor 252 indicates that the reduction ratio selected in the transmission 25 has been changed. For example, when the motorcycle 1 includes a sensor that detects a speed ratio shift operation, the ECU 100 may detect the change in the reduction ratio based on the detection result of this sensor. Specifically, this sensor may detect shift-up manipulation that lowers the reduction ratio or shift-down manipulation that raises the reduction ratio. In a state where the fifth condition is satisfied, it is preferable to stop the suppression control that is being executed, in order to attach importance to the driving feeling of the operator, and due to the change in the load acting on the driving source being allowed during the transient state of speed ratio shifting. When the reduction ratio is changed, the maximum excess degree changes. Therefore, to determine the output power suppression amount of the internal combustion engine 11, it is necessary to reset the current excess degree and generate a new excess degree. Because of these reasons, it is preferable to stop the suppression control that is being executed.

The sixth condition is a condition that the temperature of the catalyst 322 becomes an upper limit temperature or more. There is a possibility that in the suppression control, an air-fuel ratio of the amount of fuel and the amount of air which are supplied to the internal combustion engine 11 changes, and this increases the temperature of the catalyst. There is a possibility that when the temperature of the catalyst becomes the upper limit temperature or more, for example, the purification function deteriorates, and the catalyst 322 deteriorates. In a state where the sixth condition is satisfied, it is necessary to stop the suppression control that is being executed, and perform other control that quickly lowers the temperature of the catalyst. The ECU 100 may estimate the temperature of the catalyst 322 by using the detection result of the catalyst temperature sensor 323. Or, the ECU 100 may estimate the temperature of the catalyst 322 by using information of the intake air amount of the internal combustion engine 11, information of the vehicle speed of the motorcycle 1, information of the rotational speed of the internal combustion engine 11, and information of the ignition timing of the internal combustion engine 11.

The first, second, third, and sixth conditions are rotation conditions related to a rotation state of the internal combustion engine 11. Each rotation condition is a condition that the suppression control that is being executed becomes unnecessary since the influence by the excessive rotation of the internal combustion engine 11 which is more than the upper threshold Th1 becomes small. The fourth condition is a load condition related to the state of the load received by the internal combustion engine 11. The load condition is a condition that the suppression control that is being executed becomes unnecessary since the load received by the internal combustion engine 11 decreases. The sixth condition is an excess degree condition related to the excess degree. The excess degree condition is a condition that the suppression control that is being executed becomes unnecessary since it is necessary to newly generate the excess degree due to, for example, a change in the maximum excess degree.

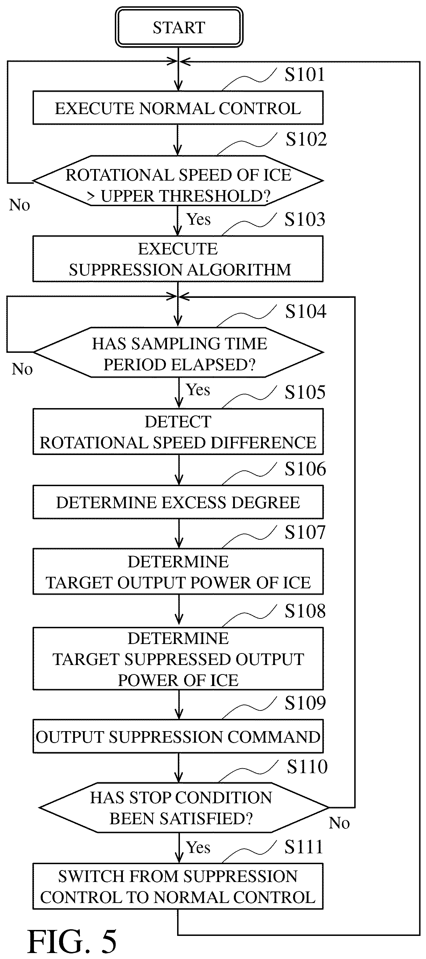

The operation of the ECU 100 that controls the rotational speed of the internal combustion engine 11 will be described. FIG. 5 is a flowchart showing one example of the operation of the ECU 100 according to the embodiment. As shown in FIG. 5, in Step S101, the ECU 100 executes the normal control of the internal combustion engine 11.

In Step S102, the ECU 100 acquires the detection result of the rotation sensor 261 and determines based on this detection result whether or not the rotational speed of the internal combustion engine 11 has exceeded the upper threshold Th1. When the rotational speed of the internal combustion engine 11 has exceeded the upper threshold Th1 (Yes in Step S102), the ECU 100 proceeds to Step S103. When the rotational speed of the internal combustion engine 11 is the upper threshold Th1 or less (No in Step S102), the ECU 100 returns to Step S101.

In Step S103, the ECU 100 executes the suppression algorithm of the internal combustion engine 11.

In Step S104, the ECU 100 determines whether or not the sampling time period Ps has elapsed. When the sampling time period Ps has elapsed (Yes in Step S104), the ECU 100 proceeds to Step S105. When the sampling time period Ps has not elapsed yet (No in Step S104), the ECU 100 repeats Step S104.

In Step S105, the ECU 100 detects the rotational speed difference between the rotational speed of the internal combustion engine 11 in the most recent sampling time period Ps and the upper threshold Th1. The ECU 100 determines the count value, which is a component of the excess degree E, by using the sampling time period Ps and the rotational speed difference.

In Step S106, the ECU 100 determines the excess degree E by adding this count value to the total value of the count values which have been added so far. When the count values have not been added yet, the ECU 100 determines the excess degree E by adding the above count value to the initial value. When the count values have not been added yet, the positive count value is added to the initial value, and this satisfies the suppression condition. Therefore, the ECU 100 switches from the normal control to the suppression control.

In Step S107, the ECU 100 determines the target output power of the internal combustion engine 11. The ECU 100 may execute the determination of the target output power at any timing in or after Step S104 and may execute the determination of the target output power concurrently with one or more of Steps S105 and S106.

In Step S108, the ECU 100 determines the target suppressed output power PST by using the excess degree E and the target output power of the internal combustion engine 11.

In Step S109, the ECU 100 outputs to the actuator 40 the suppression command corresponding to the target suppressed output power PST.

In Step S110, the ECU 100 determines based on the detection results of various sensors whether or not the stop condition of the suppression control has been satisfied. When the stop condition is satisfied (Yes in Step S110), the ECU 100 proceeds to Step S111. When the stop condition is not satisfied (No in Step S110), the ECU 100 returns to Step S104. In Step S104, the ECU 100 determines whether or not the next sampling time period Ps has elapsed. The ECU 100 may execute Step S110 at any timing in or after Step S104 and may execute Step S110 concurrently with one or more of Steps S105 to S109.

In Step S111, the ECU 100 switches the control of the internal combustion engine 11 from the suppression control to the normal control. The ECU 100 resets each of the excess degree, the excess time period, and the like to the initial value or zero and terminates the suppression algorithm. After Step S111, the ECU 100 repeats Step S101 and its subsequent steps.

According to Steps S101 to S111, in the suppression control, the ECU 100 determines the target suppressed output power PST of the internal combustion engine 11 by using the excess degree E that increases as the excess time period increases. The output power suppression amount PS of the internal combustion engine 11 increases as the excess time period increases. Therefore, the target suppressed output power PST decreases as the excess time period increases. Since the target suppressed output power PST changes in accordance with the length of the excess time period, the target suppressed output power PST does not change sharply. Therefore, while suppressing the sharp change in the behavior of the internal combustion engine 11 whose rotational speed has exceeded the upper threshold Th1, the ECU 100 can lower the rotational speed of the internal combustion engine 11.

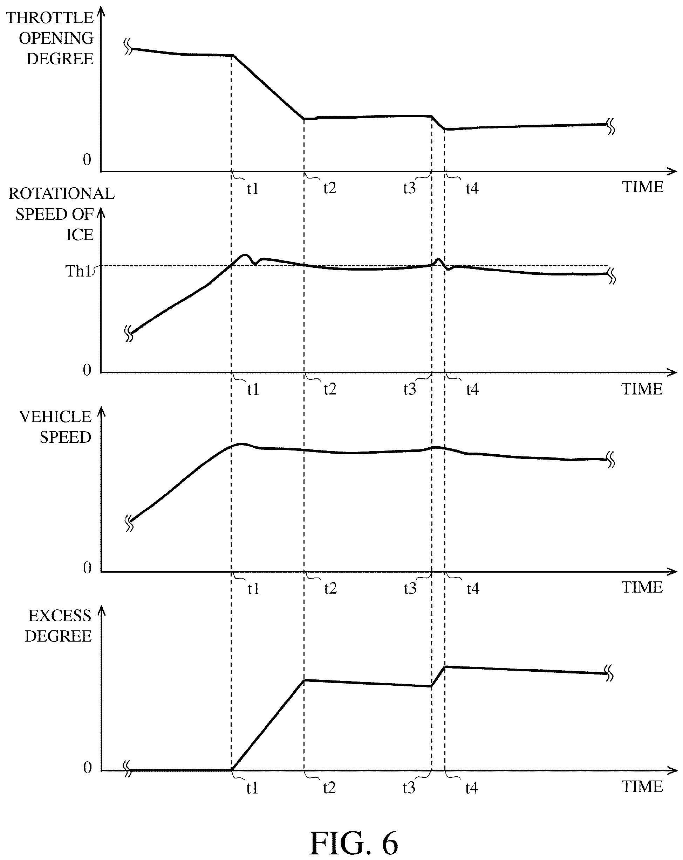

Examples of the control of the rotational speed of the internal combustion engine 11 by the ECU 100 according to the embodiment will be described. FIG. 6 shows Example 1 that is a control example in which when the motorcycle 1 travels on a flat land, the ECU 100 controls the rotational speed of the internal combustion engine 11. In Examples below, as the output power suppression in the suppression control, the ECU 100 suppresses the output power output from the internal combustion engine 11 by adjusting the opening degree of the throttle valve 411.

As shown in FIG. 6, the rotational speed of the internal combustion engine 11 reaches the upper threshold Th1 at a time point t1 and exceeds the upper threshold Th1 immediately after the time point t1. The ECU 100 starts the suppression control at the time point t1, specifically at a time point when the sampling time period Ps has elapsed from the time point t1. In other words, until the rotational speed of the internal combustion engine 11 reaches the upper threshold Th1, the ECU 100 does not start suppressing the opening degree of the throttle valve 411. Therefore, until the time point t1, the ECU 100 can easily maintain an accelerating state of the motorcycle 1 and prevent a bad influence on the driving feeling of the operator.

After the time point t1, the ECU 100 starts the output power suppression of the internal combustion engine 11. In a time period which is after the time point t1 and close to the time point t1, a time period in which the rotational speed of the internal combustion engine 11 is higher than the upper threshold Th1 is short. Therefore, the output power suppression amount is small. Thus, the rotational speed of the internal combustion engine 11 may continuously exceed the upper threshold Th1 from the time point t1. After the time point t1, the rotational speed of the internal combustion engine 11 may slightly increase. After the time point t1, the ECU 100 calculates the excess degree by continuously adding the positive count values in the respective sampling time periods Ps. The ECU 100 decreases the opening degree of the throttle valve 411 based on the calculated excess degree. Therefore, even when the elapsed time exceeds the time point t1, the rotational speed of the internal combustion engine 11 continuously exceeds the upper threshold Th1, and the excess degree gradually increases with time. Then, the ECU 100 gradually decreases the opening degree of the throttle valve 411 in accordance with the excess degree that gradually increases.

Therefore, the rotational speed of the internal combustion engine 11 changes in a region relatively close to the upper threshold Th1. Thus, the change in the rotational speed of the internal combustion engine 11 around the time point t1 is prevented from exerting a bad influence on the driving feeling of the operator.

When the ECU 100 gradually increases the output power suppression amount and continuously suppresses the output power, the rotational speed of the internal combustion engine 11 decreases with time. At a time point t2 when a certain time has elapsed from the time point t1, the rotational speed of the internal combustion engine 11 reaches the upper threshold Th1. Immediately after the time point t2, the rotational speed of the internal combustion engine 11 becomes less than the upper threshold Th1. After the time point t2, the rotational speed of the internal combustion engine 11 is continuously the upper threshold Th1 or less. Therefore, the ECU 100 continues to add the negative count values to the excess degree in the respective sampling time periods Ps, and the excess degree gradually decreases with time. After the time point t2, the ECU 100 gradually increases the opening degree of the throttle valve 411 in accordance with the decrease in the excess degree while maintaining the output power suppressed state.

A change speed of the excess degree after the time point t2 is significantly lower than a change speed of the excess degree between the time point t1 and the time point t2, and a change amount of the opening degree of the throttle valve 411 after the time point t2 is significantly smaller than a change amount of the opening degree of the throttle valve 411 between the time point t1 and the time point t2. Therefore, the rotational speed of the internal combustion engine 11 changes in the vicinity of the upper threshold Th1 without changing sharply. Thus, the change in the rotational speed of the internal combustion engine 11 around the time point t2 is prevented from exerting a bad influence on the driving feeling of the operator.

As time elapses from the time point t2, the excess degree decreases, and the output power suppression amount decreases. Therefore, the rotational speed of the internal combustion engine 11 may increase and reach the upper threshold Th1 again at a time point t3 and exceed the upper threshold Th1 immediately after the time point t3. After the time point t3, the ECU 100 adds the positive count values to the excess degree in the respective sampling time periods Ps. Therefore, the excess degree starts increasing. After the time point t3, the rotational speed of the internal combustion engine 11 continuously exceeds the upper threshold Th1, and the excess degree gradually increases with time. Then, the ECU 100 gradually decreases the opening degree of the throttle valve 411 in accordance with the excess degree that gradually increases.

The change speed of the excess degree after the time point t3 is higher than the change speed of the excess degree between the time point t2 and the time point t3 but is significantly lower than the change speed of the excess degree between the time point t1 and the time point t2. The change amount of the opening degree of the throttle valve 411 after the time point t3 is larger than the change amount of the opening degree of the throttle valve 411 between the time point t2 and the time point t3 but is significantly smaller than the change amount of the opening degree of the throttle valve 411 between the time point t1 and the time point t2. Therefore, the rotational speed of the internal combustion engine 11 changes in a region relatively close to the upper threshold Th1. Thus, the change in the rotational speed of the internal combustion engine 11 around the time point t3 is prevented from exerting a bad influence on the driving feeling of the operator.

As time elapses from the time point t3, the excess degree increases, and the output power suppression amount increases. Therefore, the rotational speed of the internal combustion engine 11 may decrease and reach the upper threshold Th1 again at a time point t4 and become the upper threshold Th1 or less immediately after the time point t4. After the time point t4, the ECU 100 adds the negative count values to the excess degree in the respective sampling time periods Ps. Therefore, the excess degree starts decreasing. After the time point t4, the rotational speed of the internal combustion engine 11 is continuously the upper threshold Th1 or less, and the excess degree decreases with time. Then, the ECU 100 gradually increases the opening degree of the throttle valve 411 in accordance with the excess degree that gradually decreases.

As with the change speed of the excess degree between the time point t2 and the time point t3, the change speed of the excess degree after the time point t4 is significantly lower than the change speed of the excess degree between the time point t1 and the time point t2. As with the change speed of the opening degree of the throttle valve 411 between the time point t2 and the time point t3, the change speed of the opening degree of the throttle valve 411 after the time point t4 is significantly lower than the change speed of the opening degree of the throttle valve 411 between the time point t1 and the time point t2. After the time point t4, the rotational speed of the internal combustion engine 11 changes in the vicinity of the upper threshold Th1 without changing sharply while maintaining the upper threshold Th1 or less. Therefore, the change in the rotational speed of the internal combustion engine 11 around the time point t4 is prevented from exerting a bad influence on the driving feeling of the operator.

As above, in addition to the difference of the rotational speed of the internal combustion engine 11 from the upper threshold Th1, the ECU 100 reflects the excess time period and non-excess time period of the rotational speed with respect to the upper threshold Th1, in the output power suppression amount of the internal combustion engine 11. Thus, the output power suppression amount is prevented from changing sharply, and the rotational speed of the internal combustion engine 11 is easily maintained in the vicinity of the upper threshold Th1. In addition, the rotational speed of the internal combustion engine 11 can be prevented from exceeding the limit threshold Th2.

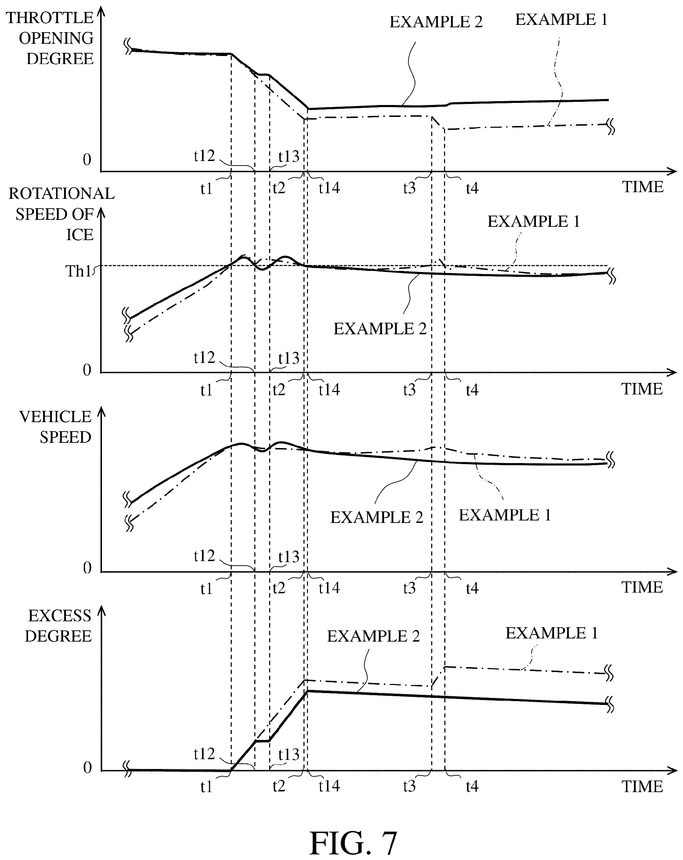

FIG. 7 shows Example 2 that is a control example in which when the motorcycle 1 travels on an upslope, the ECU 100 controls the rotational speed of the internal combustion engine 11. FIG. 7 shows Example 2 represented by solid lines and Example 1 represented by one-dot chain lines.

As shown in FIG. 7, in Example 2, the rotational speed of the internal combustion engine 11 reaches the upper threshold Th1 at the time point t1 and exceeds the upper threshold Th1 immediately after the time point t1. At a time point when the sampling time period Ps has elapsed from the time point t1, the ECU 100 starts the suppression control. As with Example 1, after the time point t1, the ECU 100 calculates the excess degree by adding the positive count values in the respective sampling time periods Ps. The ECU 100 gradually decreases the opening degree of the throttle valve 411 in accordance with the excess degree that gradually increases.

On the other hand, the internal combustion engine 11 of the motorcycle 1 that is traveling on the upslope receives a load, which inhibits the rotation of the internal combustion engine 11 and is larger than a load when the motorcycle 1 is traveling on the flat land, by gravity acting on the motorcycle 1. Therefore, the increase in the rotational speed is suppressed by such load. Thus, after the time point t1, the excess part of the rotational speed of the internal combustion engine 11 with respect to the upper threshold Th1 may be smaller than that in Example 1. Therefore, the excess degree may become smaller than that in Example 1, and the output power suppression amount may also become smaller than that in Example 1.

After the time point t1, the rotational speed of the internal combustion engine 11 changes in a region relatively close to the upper threshold Th1 by the output power suppression amount and the load induced by the upslope traveling of the motorcycle 1. Therefore, an influence on the driving feeling of the operator by the change in the rotational speed of the internal combustion engine 11 around the time point t1 may become small.

The rotational speed of the internal combustion engine 11 decreases with time by the engine power suppression and the load induced by the upslope traveling of the motorcycle 1. The rotational speed of the internal combustion engine 11 reaches the upper threshold Th1 at a time point t12 and becomes less than the upper threshold Th1 immediately after the time point t12. A time period from the time point t1 to the time point t12 is shorter than a time period from the time point t1 to the time point t2 in Example 1. Moreover, the value of the excess degree at the time point t12 is smaller than the value of the excess degree at the time point t2 in Example 1. Therefore, the ECU 100 lowers the rotational speed of the internal combustion engine 11 to the upper threshold Th1 by the output power suppression amount that is smaller than the output power suppression amount in Example 1.

After the time point t12, the ECU 100 calculates the excess degree by adding the negative count values in the respective sampling time periods Ps. The ECU 100 gradually increases the opening degree of the throttle valve 411 in accordance with the excess degree that gradually decreases. The rotational speed of the internal combustion engine 11 changes in the vicinity of the upper threshold Th1 without changing sharply.

As time elapses from the time point t12, the excess degree decreases, and the output power suppression amount decreases. Therefore, the rotational speed of the internal combustion engine 11 increases and reaches the upper threshold Th1 again at a time point t13 and exceeds the upper threshold Th1 immediately after the time point t13. After the time point t13, the ECU 100 calculates the excess degree by adding the positive count values in the respective sampling time periods Ps. The ECU 100 gradually decreases the opening degree of the throttle valve 411 in accordance with the excess degree that gradually increases.

The change speed of the excess degree after the time point t13 is similar to the change speed of the excess degree between the time point t1 and the time point t12. The change speed of the opening degree of the throttle valve 411 after the time point t13 is similar to the change speed of the opening degree of the throttle valve 411 between the time point t1 and the time point t12. After the time point t13, the rotational speed of the internal combustion engine 11 changes in a region relatively close to the upper threshold Th1.

The rotational speed of the internal combustion engine 11 decreases with time by the output power suppression and the load induced by the upslope traveling of the motorcycle 1. The rotational speed of the internal combustion engine 11 reaches the upper threshold Th1 at a time point t14 and becomes less than the upper threshold Th1 immediately after the time point t14. The value of the excess degree at the time point t14 is smaller than the value of the excess degree at each of the time point t2 and the time point t4 in Example 1. Therefore, the ECU 100 lowers the rotational speed of the internal combustion engine 11 to the upper threshold Th1 by the output power suppression amount that is smaller than the output power suppression amount in Example 1. Thus, the influence on the driving feeling of the operator by the change in the rotational speed of the internal combustion engine 11 around the time point t13 may become small.

After the time point t14, the ECU 100 calculates the excess degree by adding the negative count values in the respective sampling time periods Ps. The ECU 100 gradually increases the opening degree of the throttle valve 411 in accordance with the excess degree that gradually decreases. The rotational speed of the internal combustion engine 11 changes in a region relatively close to the upper threshold Th1 without changing sharply while maintaining the upper threshold Th1 or less.

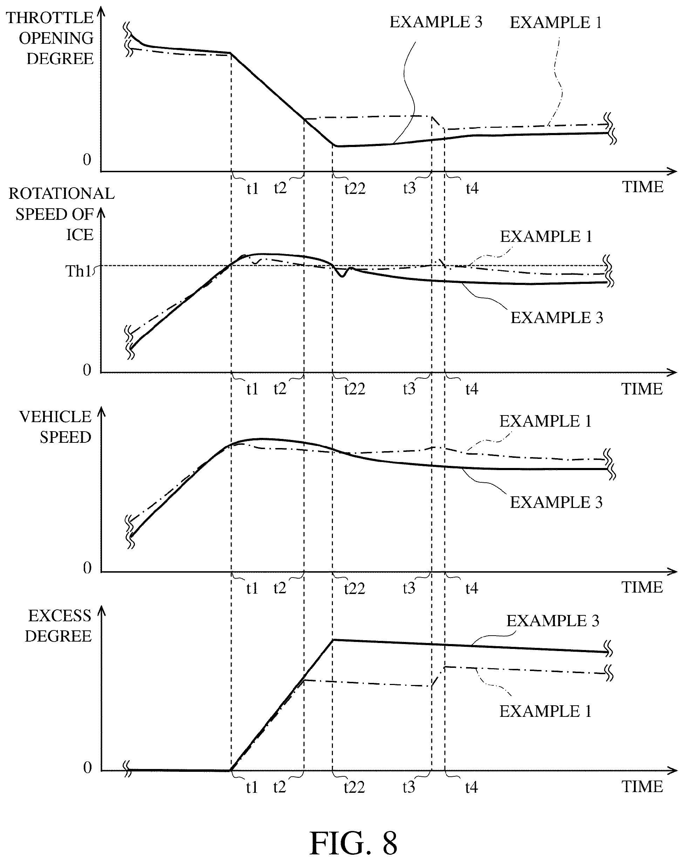

FIG. 8 shows Example 3 that is a control example in which when the motorcycle 1 travels on a downslope, the ECU 100 controls the rotational speed of the internal combustion engine 11. FIG. 8 shows Example 3 represented by solid lines and Example 1 represented by one-dot chain lines.

As shown in FIG. 8, in Example 3, the rotational speed of the internal combustion engine 11 reaches the upper threshold Th1 at the time point t1 and exceeds the upper threshold Th1 immediately after the time point t1. At a time point when the sampling time period Ps has elapsed from the time point t1, the ECU 100 starts the suppression control. As with Example 1, after the time point t1, the ECU 100 calculates the excess degree by adding the positive count values in the respective sampling time periods Ps. The ECU 100 gradually decreases the opening degree of the throttle valve 411 in accordance with the excess degree that gradually increases.

On the other hand, the internal combustion engine 11 of the motorcycle 1 that is traveling on the downslope receives assist force from the gravity acting on the motorcycle 1. The assist force promotes the rotation of the internal combustion engine 11. Therefore, after the time point t1, the excess part of the rotational speed of the internal combustion engine 11 with respect to the upper threshold Th1 may become larger than that in Example 1. Therefore, the excess degree may become larger than that in Example 1, and the output power suppression amount may also become larger than that in Example 1.

After the time point t1, the rotational speed of the internal combustion engine 11 changes in a region relatively close to the upper threshold Th1 by the output power suppression amount and the assist force. Therefore, the influence on the driving feeling of the operator by the change in the rotational speed of the internal combustion engine 11 around the time point t1 may become small.

The rotational speed of the internal combustion engine 11 decreases with time by the output power suppression against the assist force induced by the downslope traveling of the motorcycle 1. The rotational speed of the internal combustion engine 11 reaches the upper threshold Th1 at a time point t22 and becomes less than the upper threshold Th1 immediately after the time point t22. A time period from the time point t1 to the time point t22 is longer than a time period from the time point t1 to the time point t2 in Example 1. Moreover, the value of the excess degree at the time point t22 is larger than the value of the excess degree at the time point t2 in Example 1. Therefore, the ECU 100 lowers the rotational speed of the internal combustion engine 11 to the upper threshold Th1 by the output power suppression amount that is larger than the output power suppression amount in Example 1.

After the time point t22, the ECU 100 calculates the excess degree by adding the negative count values in the respective sampling time periods Ps. The ECU 100 gradually increases the opening degree of the throttle valve 411 in accordance with the excess degree that gradually decreases. The rotational speed of the internal combustion engine 11 changes in a region relatively close to the upper threshold Th1 without changing sharply while maintaining the upper threshold Th1 or less.

### Others

Although the foregoing has described an exemplary embodiment of the present invention, the present invention is not limited to the embodiment. Various changes and modifications can be made without departing from the scope of the present invention. The scope of the present invention includes, for example, embodiments resulting from various changes made to the above embodiment or constructed by combining the elements of different embodiments.

For example, in the embodiment, the ECU 100 suppresses the output power to be output from the internal combustion engine 11 by using the excess degree based on the case where the occurring state of the exceeding phenomenon is the time period of the occurrence of the exceeding phenomenon. However, the excess degree is not limited to this. For example, the occurring state of the exceeding phenomenon which is related to the excess degree may be the number of times of the occurrence of the exceeding phenomenon or the frequency of the occurrence of the exceeding phenomenon.

For example, in the case where the occurring state of the exceeding phenomenon is the number of times of the occurrence of the exceeding phenomenon, the excess degree may be related to the number of times of the occurrence of the exceeding phenomenon. The exceeding phenomenon is a phenomenon in which the rotational speed of the internal combustion engine 11 exceeds the upper threshold for a preset unit time period. As the value of the number of times of the occurrence of the exceeding phenomenon that occurs continuously increases, the value of the excess degree increases.

For example, in the case where the occurring state of the exceeding phenomenon is the frequency of the occurrence of the exceeding phenomenon, the excess degree may be related to the frequency of the occurrence of the exceeding phenomenon. The exceeding phenomenon is a phenomenon in which the rotational speed of the internal combustion engine 11 exceeds the upper threshold for a preset unit time period. In a preset frequency calculating time period, as the value of the number of times of the occurrence of the exceeding phenomenon increases, the value of the excess degree increases.

In any case, the ECU 100 determines in each predetermined time period whether or not the rotational speed of the internal combustion engine 11 has exceeded the upper threshold. In response to the rotational speed of the internal combustion engine 11 having exceeded the upper threshold, the ECU 100 may increment the count value of an excess number of times or an excess frequency. The excess number of times denotes the number of times the rotational speed of the internal combustion engine 11 exceeds the upper threshold for a unit time period. The excess frequency denotes the number of times the rotational speed of the internal combustion engine 11 exceeds the upper threshold for a unit time period in the frequency calculating time period. The ECU 100 may determine the excess degree based on the count value. Or, the ECU 100 may detect the number of times the rotational speed of the internal combustion engine 11 exceeds the upper threshold in a predetermined time period, by scanning the change in the rotational speed of the internal combustion engine 11 in the predetermined time period. The ECU 100 may determine the excess number of times or the excess frequency based on the number of times of the detection in the predetermined time period, and may determine the excess degree based on the excess number of times or the excess frequency.

In the embodiment, the ECU 100 determines the excess degree based on the total value obtained by counting up the count values in the respective sampling time periods. However, the determination of the total value is not limited to this. For example, the ECU 100 may subject the rotational speed of the internal combustion engine 11 or the rotational speed difference to time integration and determine the excess degree based on the result of the integration. For example, the excess degree may be the result of the time integration or a value obtained by subjecting the result of the time integration to calculation processing. Even when the ECU 100 uses such excess degree, the ECU 100 can suppress the output power while making the change of the internal combustion engine 11 moderate.

In the embodiment, the initial value of the excess degree is set to values that are different from each other depending on the reduction ratios set in the transmission 25. However, the initial value of the excess degree may be set to a single value for all of the reduction ratios.

In the embodiment, regarding the count value for determining the excess degree, when the absolute value of the positive rotational speed difference and the absolute value of the negative rotational speed difference are the same as each other, the absolute value of the count value corresponding to the positive rotational speed difference and the absolute value of the count value corresponding to the negative rotational speed difference are the same as each other. The rotational speed difference is obtained by subtracting the upper threshold Th1 from the rotational speed of the internal combustion engine 11. However, the relation between the rotational speed difference and the count value is not limited to the above relation. For example, even when the absolute value of the positive rotational speed difference and the absolute value of the negative rotational speed difference are the same as each other, the absolute value of the count value corresponding to the positive rotational speed difference and the absolute value of the count value corresponding to the negative rotational speed difference may be different from each other. Even when the absolute values of the range for the positive rotational speed difference and the absolute values of the range for the negative rotational speed difference are the same as each other, the absolute values of the count values in those ranges may be different from each other.

In the embodiment, when the rotational speed difference is zero, the count value is a negative value but may be zero. Thus, when the rotational speed difference is zero, the excess degree does not change, and therefore, the ECU 100 may maintain the ratio of the output power suppression amount to the target output power of the internal combustion engine 11.

In the embodiment, the ECU 100 adds the negative count value to the excess degree but does not have to add the negative count value to the excess degree. In this case, when the count value is a negative value, the excess degree does not change, and therefore, the ECU 100 may maintain the ratio of the output power suppression amount to the target output power of the internal combustion engine 11.

In the embodiment, the count values corresponding to the same range for the rotational speed difference are different from each other depending on the reduction ratios set in the transmission 25. However, the count values are not limited to this. For example, the count values corresponding to the same range for the rotational speed difference may be the same as each other regardless of the reduction ratios set in the transmission 25.

The ECU 100 according to the embodiment determines or corrects the maximum excess degree in accordance with the vehicle state of the motorcycle 1. Examples of such vehicle state include the reduction ratio that is being set in the transmission 25, the vehicle speed of the motorcycle 1, the intake pressure of the internal combustion engine 11, the intake air temperature of the internal combustion engine 11, and the attitude of the motorcycle 1. However, the vehicle state is not limited to these.

For example, the vehicle state may be the inclination amount of the motorcycle 1 in the upward/downward direction. The ECU 100 may determine or correct the maximum excess degree by using the inclination amount in the upward/downward direction. In this case, the ECU 100 may detect the inclination amount of the motorcycle 1 in the upward/downward direction by using the detection result of the inertial sensor 401, the detection result of a front stroke sensor, the detection result of a rear stroke sensor, or two or more of these. Therefore, the motorcycle 1 may include the front stroke sensor, the rear stroke sensor, or both of these. These stroke sensors output detection results to the ECU 100. The front stroke sensor detects the amount of stroke by which the front forks 104 serving as a front suspension are extended or contracted. The rear stroke sensor detects the amount of stroke by which the rear suspension 106 is extended or contracted.

The ECU 100 may determine or correct the maximum excess degree such that the maximum excess degree when the inclination amount in the upward/downward direction is small becomes larger than the maximum excess degree when the inclination amount in the upward/downward direction is large. For example, the ECU 100 may determine or correct the maximum excess degree such that the maximum excess degree becomes smaller as the inclination amount in the upward/downward direction shifts from a small amount toward a large amount. Thus, as the inclination amount of the motorcycle 1 in the upward/downward direction shifts from the large amount toward the small amount, i.e., as the attitude of the motorcycle 1 in the upward/downward direction shifts toward a stable state, the output power suppression amount of the internal combustion engine 11 may decrease, and the target suppressed output power may increase.

Or, the ECU 100 may determine or correct the maximum excess degree on the basis that the inclination amount of the motorcycle 1 in the upward/downward direction is classified into the inclination amount in a forward inclination direction and the inclination amount in a rearward inclination direction. For example, the ECU 100 may determine or correct the maximum excess degree such that the maximum excess degree when the inclination amount in the forward inclination direction is small becomes larger than the maximum excess degree when the inclination amount in the forward inclination direction is large. For example, the ECU 100 may determine or correct the maximum excess degree such that the maximum excess degree becomes smaller as the inclination amount in the forward inclination direction shifts from a small amount toward a large amount. Thus, as the inclination amount of the motorcycle 1 in the forward inclination direction shifts from the large amount toward the small amount, the output power suppression amount of the internal combustion engine 11 may decrease, and the target suppressed output power may increase.

For example, the ECU 100 may determine or correct the maximum excess degree such that the maximum excess degree when the inclination amount in the rearward inclination direction is large becomes larger than the maximum excess degree when the inclination amount in the rearward inclination direction is small. For example, the ECU 100 may determine or correct the maximum excess degree such that the maximum excess degree becomes smaller as the inclination amount in the rearward inclination direction shifts from a large amount toward a small amount. Thus, as the inclination amount of the motorcycle 1 in the rearward inclination direction shifts from the small amount toward the large amount, the output power suppression amount of the internal combustion engine 11 may decrease, and the target suppressed output power may increase.

In the embodiment, the ECU 100 determines the output power suppression amount of the internal combustion engine 11 based on the ratio of the excess degree to the maximum excess degree. However, the determination of the output power suppression amount is not limited to this. For example, the ECU 100 may store in the memory M a map that is defined as a table prepared from a graph in which the output power suppression amount corresponding to the excess degree is determined by the excess degree. The ECU 100 may store in the memory M a map that is defined as a table prepared from a graph in which the output power suppression amount corresponding to the excess degree and the vehicle state of the motorcycle 1 is determined by the excess degree and the vehicle state. The ECU 100 may acquire the output power suppression amount by inputting the excess degree to the map or by inputting the excess degree and the vehicle state of the motorcycle 1 to the map.

In the embodiment, the ECU 100 adjusts the output power suppression amount of the internal combustion engine 11 in accordance with the vehicle state of the motorcycle 1 by determining or correcting the maximum excess degree in accordance with the vehicle state of the motorcycle 1. However, the method of adjusting the output power suppression amount is not limited to this. For example, the ECU 100 may determine or correct the count value, which is used to determine the excess degree, in accordance with the vehicle state of the motorcycle 1. For example, the ECU 100 may determine or correct the count value such that the count value determined or corrected in accordance with the vehicle state that increases the maximum excess degree becomes smaller than the count value determined or corrected in accordance with the vehicle state that decreases the maximum excess degree. For example, the ECU 100 may determine or correct the count value such that the count value increases as the vehicle state shifts from the vehicle state that increases the maximum excess degree toward the vehicle state that decreases the maximum excess degree. The ECU 100 may determine or correct the count value such that the behavior of the change in the count value with respect to the change in the vehicle state becomes opposite to the behavior of the change in the maximum excess degree with respect to the change in the vehicle state.

In the embodiment, the ECU 100 is configured to determine the target torque of the internal combustion engine 11 and suppress the target torque, in order to suppress the output power to be output from the internal combustion engine 11. Moreover, the ECU 100 determines the target opening degree of the throttle valve 411 and the target fuel injection quantity of the fuel injection valve which correspond to the suppressed target torque. However, the method of suppressing the output power of the internal combustion engine 11 is not limited to this. For example, the ECU 100 may store in the memory M a map that is defined as a table prepared from a graph in which the opening degree of the throttle valve 411 and the fuel injection quantity of the fuel injection valve which realize the output power of the internal combustion engine 11 are determined by the output power of the internal combustion engine 11 and the rotational speed of the internal combustion engine 11. The ECU 100 may acquire the target opening degree of the throttle valve 411 and the target fuel injection quantity of the fuel injection valve by applying the target suppressed output power of the internal combustion engine 11 and the rotational speed of the internal combustion engine 11 to the map. The ECU 100 may acquire the target ignition timing of the ignition plug, which realizes the target suppressed output power, by applying the target opening degree and the rotational speed of the internal combustion engine 11 to the ignition map.

In the embodiment, the ECU 100 stores in the memory M the stop condition including the first to sixth conditions. However, the stop condition is not limited to this. The stop condition may include one or more of the first to sixth conditions. In addition to one or more of the first to sixth conditions, the stop condition may include one or more of seventh to tenth conditions. In response to one or more of the conditions included in the stop condition being satisfied, the ECU 100 may stop the suppression algorithm or the suppression control.

The seventh condition is a condition that the detection result of the throttle position sensor 232 indicates the decrease in the opening degree of the throttle valve 411. A decrease amount of the opening degree of the throttle valve 411 which satisfies the seventh condition may be set to any decrease amount. In a state where the seventh condition is satisfied, the internal combustion engine 11 behaves so as to lower the rotational speed. Therefore, to attach importance to the driving feeling of the operator, it is preferable to stop the suppression control that is being executed. The seventh condition is a load condition.

The eighth condition is a condition that one or more of the detection results of the brake sensors 213 and 223 indicate one or more of the operations of the front brake 211 and the rear brake 221. In a state where the eighth condition is satisfied, the rotation of the internal combustion engine 11 is forcibly suppressed by one or more of the front brake 211 and the rear brake 221. Therefore, the suppression control that is being executed becomes unnecessary. The eighth condition is a rotation condition.

The ninth condition is a condition that a rearward inclination attitude angle of the motorcycle 1 is a threshold or more. The ECU 100 may detect the rearward inclination attitude angle of the motorcycle 1 based on one or more of the detection result of the inertial sensor 401, the detection result of the front stroke sensor included in the motorcycle 1, and the detection result of the rear stroke sensor included in the motorcycle 1. In a state where the motorcycle 1 is in such a rearward inclination attitude that the front wheel 21 is higher in position than the rear wheel 22, the motorcycle 1 may be traveling on an upslope. When the suppression control is executed while the motorcycle 1 is traveling on the upslope, the rotation of the internal combustion engine 11 may be excessively suppressed beyond the expectation of the operator. In a state where the ninth condition is satisfied, the rotation of the internal combustion engine 11 may be excessively suppressed. Therefore, to attach importance to the driving feeling of the operator, it is preferable to stop the suppression control that is being executed. The ninth condition is a rotation condition.

The tenth condition is a condition that the temperature of the catalyst 322 becomes a lower limit temperature or less. There is a possibility that during the suppression control, the air-fuel ratio of the amount of fuel and the amount of air which are supplied to the internal combustion engine 11 changes, and this increases the temperature of the catalyst. Moreover, there is a possibility that when the temperature of the catalyst becomes the lower limit temperature or less, the catalyst 322 cannot achieve the adequate purification function. In a state where the tenth condition is satisfied, to increase the temperature of the catalyst, the suppression control that is being executed becomes unnecessary.

The stop condition may include a condition that a value indicating the state of the motorcycle 1 which is detected based on the detection result of the inertial sensor 401 is a threshold or more. Examples of the value indicating the state of the motorcycle 1 may include the attitude angle of the motorcycle 1 and the inertial force of the motorcycle 1. For example, when the start of the turn of the motorcycle 1 is detected, or when a state like the weight shift of the operator for the turn of the motorcycle 1 is detected, the behavior of the motorcycle 1 may become unstable by the suppression of the rotation of the internal combustion engine 11. Therefore, to attach importance to the driving feeling of the operator, the suppression control that is being executed may be stopped.

The suppression algorithm according to the embodiment may be combined with PID (Proportional-Integral-Differential) control when the internal combustion engine 11 is subjected to the PID control. For example, when the rotational speed of the internal combustion engine 11 exceeds the upper threshold Th1, and therefore, the ECU 100 starts the suppression control, the ECU 100 may change coefficient values of a P term, an I term, and a D term in the PID control to coefficient values that stabilize the response of the internal combustion engine 11 more than the response before the suppression control. The P term is a term corresponding to proportional control, and the coefficient of the P term is a proportional gain. The I term is a term corresponding to integral control, and the coefficient of the I term is an integral gain. The D term is a term corresponding to derivative control, and the coefficient of the D term is a derivative gain. The values of the proportional gain, the integral gain, and the derivative gain while the suppression control is executed and the values of the proportional gain, the integral gain, and the derivative gain while the suppression control is not executed may be preset and stored in the memory M of the ECU 100. The ECU 100 may switch the values of the proportional gain, the integral gain, and the derivative gain in accordance with whether or not the suppression control is executed, and may change the values of the proportional gain, the integral gain, and the derivative gain while the suppression control is executed. For example, the ECU 100 may increase or decrease the values of the proportional gain, the integral gain, and the derivative gain in accordance with the output power suppression amount of the internal combustion engine 11.

In the embodiment, the motorcycle 1 is a straddled vehicle. However, the motorcycle 1 may be a scooter including a floorboard in front of the seat 107.

In the motorcycle 1 according to the embodiment, the clutch 24 is mechanically connected to the clutch lever 241 and operates when the manipulating force applied to the clutch lever 241 is physically transmitted to the clutch 24. However, the structure that drives the clutch 24 is not limited to this. For example, the motorcycle 1 may include a clutch actuator that controls the driving of the clutch 24. The clutch actuator is controlled by the ECU 100. Based on the detection signal of the clutch sensor 242, the ECU 100 may cause a clutch actuator to set the clutch 24 to the engaged state or the disengaged state.

In the embodiment, the vehicle 1 is the motorcycle. However, the vehicle 1 is not limited to such a motorcycle. The ECU 100 and its functionality, the control circuitry 30 and its functionality, and the control method according to the present invention are applicable to various types of vehicles other than motorcycles. The vehicle 1 may be any vehicle that includes the driving source 10. The vehicle 1 may be structured to move with one or more persons on the vehicle 1. Examples of the vehicle 1 may include a wheeled vehicle, a watercraft, and various other mobility devices.

Examples of the wheeled vehicle may include a motorcycle, a moped, a power-assisted bicycle, and an automobile. The automobile may include three more wheels. Examples of the automobile may include a passenger automobile, a cargo automobile, a bus, an all-terrain vehicle, and a utility vehicle. The all-terrain vehicle may be a vehicle with off-road capability. Examples of the watercraft may include a cargo ship, a passenger ship, a work ship, a fishing ship, a pleasure boat, and a personal watercraft. The watercraft may include one or more propulsion components.

In the embodiment, the vehicle 1 includes an internal combustion engine 11 as the driving source 10. However, the driving source 10 is not limited to such an internal combustion engine. For example, the driving source 10 may be structured to generate rotational power to rotate a shaft. Examples of the driving source 10 may include a thermal engine that converts thermal energy to mechanical energy and a rotating electric machine that converts electrical energy to mechanical energy. The vehicle 1 may include one driving source 10 or two or more driving sources 10. For example, the two or more driving sources 10 may drive the same part of the vehicle 1 or may respectively drive two or more different parts of the vehicle 1. For example, each of the driving sources 10 may drive a corresponding one of the wheels 11 included in the drive structure 20. One of the two or more driving sources 10 may drive another of the driving sources 10. For example, one driving source 10 embodied as an internal combustion engine may transmit rotational power to the drive structure 20 or another driving source 10 embodied as a rotating electric machine or to both the drive structure 20 and the other driving source 10. The internal combustion engine may drive the rotating electric machine and cause the rotating electric machine to generate electrical energy.

The structure of the internal combustion engine serving as the driving source 10 may be any existing structure. The internal combustion engine runs by being supplied with a fuel. The fuel used in the internal combustion engine may be any kind of fuel. Examples of the fuel include: hydrocarbon compound-containing fuels such as gasoline, ethanol, propane gas, and methane; animal/plant-derived fuels such as biofuel; and non-carbide fuels such as hydrogen.

For example, the cylinder structure of the internal combustion engine may be a single cylinder structure or a multi-cylinder structure. The internal combustion engine may be a four-stroke engine or a two-stroke engine.

The structure of the rotating electric machine serving as the driving source 10 may be any existing structure. For example, the rotating electric machine may have an inner rotor structure that includes a stator and a rotor rotatable together with a drive shaft and in which the rotor is located inside the stator, or may have an outer rotor structure in which the rotor is located outside the stator. The rotating electric machine may rotate the rotor by receiving electric power and generate electric power by the rotor forcibly rotated via the drive shaft. The rotating electric machine may transmit the rotational driving power of the drive shaft to the drive wheel of the drive structure 20. The rotating electric machine may generate electric power by the drive shaft's rotation induced by the drive structure 20 or the internal combustion engine operating during movement of the vehicle 1 or by both the drive structure 20 and the internal combustion engine, and supply the generated electric power to a battery mounted on the vehicle 1.

The vehicle 1 may be a vehicle including only an internal combustion engine as a driving source 10, an EV (Electric Vehicle) including only a rotating electric machine as a driving source 10, or a hybrid vehicle including an internal combustion engine and a rotating electric machine as driving sources 10.

Various aspects of the technology of the present invention are as described below. The expressions "in a case that A" and "when A" as used in the specification and the claims may include the meaning "in response to the fact that A" and be interchangeable with the expression "in response to the fact that A".

A vehicle according to a first aspect of the present invention includes: a driving source; a rotation sensor that detects a rotational speed of the driving source; control circuitry configured to control the driving source; and an actuator that operates the driving source in accordance with a command given from the control circuitry, wherein: in response to the rotational speed of the driving source exceeding a preset upper threshold, the control circuitry executes suppression control that suppresses an output power of the driving source in comparison with before the rotational speed of the driving source exceeds the upper threshold; and in the suppression control, the control circuitry gives to the actuator a command that makes the output power of the driving source suppressed in comparison with before the suppression control is executed, in accordance with an excess degree set in relation to an excess time period that is a time period in which the rotational speed of the driving source has exceeded the upper threshold.

According to the first aspect, when the control circuitry determines that the rotational speed of the driving source has reached the upper threshold, the control circuitry suppresses the output power of the driving source in comparison with before the suppression control is executed, in accordance with the excess degree. A time change of the time period in which the rotational speed of the driving source has exceeded the upper threshold becomes more moderate than a time change of a deviation of the rotational speed with respect to the upper threshold. Therefore, the change in the output power of the driving source due to the output power suppression can be suppressed. For example, as compared to when the output power suppression is performed in accordance with the deviation of the rotational speed with respect to the upper threshold, the control circuitry can suppress a state where the output power suppression control and the non-output power suppression control are repeated in the vicinity of the upper threshold, i.e., a so-called hunting state.

The vehicle according to a second aspect of the present invention may be configured such that in the first aspect, the control circuitry cancels the execution of the suppression control based on a less-than time period that is a time period in which the rotational speed of the driving source is less than the upper threshold.

According to the second aspect, when a state where the rotational speed of the driving source is lower than the upper threshold continues, the control circuitry cancels the suppression control state. Thus, the suppression control state can be prevented from undesirably continuing, and the driving feeling of the vehicle can be prevented from deteriorating.

The vehicle according to a third aspect of the present invention may be configured such that: in the first or second aspect, in the suppression control, the control circuitry increases an output power suppression amount of the driving source as the excess time period increases; and in the suppression control, the control circuitry decreases the output power suppression amount of the driving source as a less-than time period increases, the less-than time period being a time period in which the rotational speed of the driving source is less than the upper threshold.

According to the third aspect, the output power suppression amount of the driving source in the suppression control is set based on the excess time period and the less-than time period. Thus, the output power suppression amount can be set so as to correspond to a time history of the state where the rotational speed has exceeded the upper threshold, and the excess state where the rotational speed has exceeded the upper threshold can be prevented from continuing while preventing a sharp change of the operation of the driving source due to the output power suppression.

The vehicle according to a fourth aspect of the present invention may be configured such that in any of the first to third aspects, in the suppression control, the control circuitry decreases an output power suppression amount of the driving source as the rotational speed of the driving source decreases.

According to the fourth aspect, when the rotational speed of the driving source is low, and a possibility that the rotational speed of the driving source reaches the upper threshold is low, the control circuitry can decrease the output power suppression amount of the driving source even during the suppression control, and thus, the driving feeling of the vehicle can be prevented from deteriorating.

The vehicle according to a fifth aspect of the present invention may be configured such that in any of the first to fourth aspects, in the suppression control, the control circuitry decreases an output power suppression amount of the driving source as a reduction ratio that is being selected in a transmission included in the vehicle becomes small.

According to the fifth aspect, when the reduction ratio that is being selected in the transmission is low, and a possibility that the rotational speed of the driving source reaches the upper threshold is low, the control circuitry can decrease the output power suppression amount of the driving source even during the suppression control, and thus, the driving feeling of the vehicle can be prevented from deteriorating.

The vehicle according to a sixth aspect of the present invention may be configured such that: in any of the first to fifth aspects, in the suppression control, the control circuitry decreases an output power suppression amount of the driving source as the rotational speed of the driving source decreases; and in the suppression control, the control circuitry decreases the output power suppression amount of the driving source as a reduction ratio that is being selected in a transmission included in the vehicle becomes small.

According to the sixth aspect, when the rotational speed of the driving source is low, and a possibility that the rotational speed of the driving source reaches the upper threshold is low, the control circuitry can decrease the output power suppression amount of the driving source even during the suppression control. Moreover, when the reduction ratio that is being selected in the transmission is low, and a possibility that the rotational speed of the driving source reaches the upper threshold is low, the control circuitry can decrease the output power suppression amount of the driving source even during the suppression control. Therefore, the control circuitry can prevent the driving feeling of the vehicle from deteriorating during the suppression control.

The vehicle according to a seventh aspect of the present invention may be configured such that in any of the first to sixth aspects, in the suppression control, in response to the control circuitry determining that a state different from a state of the rotational speed of the driving source has satisfied a preset condition, the control circuitry cancels the execution of the suppression control.

According to the seventh aspect, since a cancel condition is set irrespective of the state of the rotational speed of the driving source, the control circuitry can prevent the output power suppression state from undesirably continuing and can prevent the driving feeling of the vehicle from deteriorating.

The vehicle according to an eighth aspect of the present invention may be configured such that in the seventh aspect, in the suppression control, in response to the control circuitry determining that a reduction ratio that is being selected in a transmission included in the vehicle has been changed, the control circuitry cancels the suppression control.

According to the eighth aspect, when the control circuitry determines that the reduction ratio has been changed, the control circuitry cancels the suppression control. Thus, the control circuitry can cancel the output power suppression after the change in the reduction ratio. Therefore, the control circuitry can prevent the output power suppression state from undesirably continuing and can prevent the driving feeling of the vehicle from deteriorating.

The vehicle according to a ninth aspect of the present invention may be configured such that: in any of the first to eighth aspects, the actuator includes a throttle actuator that drives a throttle valve that adjusts a flow rate of air flowing into the driving source; the control circuitry sets a target throttle opening degree of the throttle valve based on a torque command of a torque required of the driving source in response to a command of a driving source operation input by an operator of the vehicle; and in the suppression control, the control circuitry corrects the target throttle opening degree such that the target throttle opening degree decreases as an output power suppression amount of the driving source increases.

According to the ninth aspect, as compared to when the output power of the driving source is suppressed by an ignition cut or fuel injection control with respect to the driving source, the control circuitry can prevent power feeling of the driving source, which is felt by the operator, from deteriorating.

The vehicle according to a tenth aspect of the present invention may be configured such that: in any of the first to ninth aspects, in the suppression control, the control circuitry determines the excess degree such that the excess degree increases as a reduction ratio that is being selected in a transmission included in the vehicle increases; and the control circuitry determines an output power suppression amount of the driving source such that the output power suppression amount of the driving source increases as the excess degree increases.

According to the tenth aspect, when the high reduction ratio corresponding to a low-speed side is being selected, the control circuitry increases the excess degree more than when the low reduction ratio corresponding to a high-speed side is being selected. When the reduction ratio corresponding to the low-speed side is being selected, the change in the output power of the driving source may exert an influence, such as vibration, on the vehicle more than when the reduction ratio corresponding to the high-speed side is being selected. When the reduction ratio corresponding to the low-speed side is being selected, the control circuitry suppresses the output power of the driving source by the output power suppression amount that is larger than the output power suppression amount when the reduction ratio corresponding to the high-speed side is being selected. Thus, the change in the output power of the driving source can be effectively suppressed.

The vehicle according to an eleventh aspect of the present invention may be configured such that in any of the first to tenth aspects, in response to the control circuitry determining that the rotational speed of the driving source has decreased to a preset lower threshold or less which is lower than the upper threshold, the control circuitry cancels the suppression control.

According to the eleventh aspect, when the rotational speed of the driving source has decreased to the lower threshold or less which is lower than the upper threshold, the control circuitry cancels the suppression control. In this case, since both of the start and termination of the suppression control are not based on the upper threshold, the change in the output power of the driving source in the vicinity of the upper threshold can be suppressed.

The vehicle according to a twelfth aspect of the present invention may be configured such that: in any of the first to eleventh aspects, the control circuitry acquires information of a temperature of a catalyst located in an exhaust passage, through which an exhaust gas discharged from the driving source flows, in the vehicle; and in response to the control circuitry determining that the temperature of the catalyst has decreased to a first temperature or less, the control circuitry cancels the suppression control.

According to the twelfth aspect, there is a possibility that when the temperature of the catalyst has decreased to the first temperature or less, the catalyst cannot exert an adequate purifying ability. In such a case, by terminating the suppression control, the control circuitry can prevent the purifying ability of the catalyst from deteriorating.

The vehicle according to a thirteenth aspect of the present invention may be configured such that in any of the first to twelfth aspects, the control circuitry suppresses the output power of the driving source from a target output power by a suppression degree corresponding to a ratio of the excess degree to a maximum excess degree that is a maximum value set for the excess degree.

According to the thirteenth aspect, the control circuitry increases the output power suppression amount as the excess degree increases. For example, when the excess degree is the maximum excess degree, the control circuitry may set the output power of the driving source to zero. Thus, damages of the driving source due to the excessive rotation are more effectively prevented.

The vehicle according to a fourteenth aspect of the present invention may be configured such that: in the thirteenth aspect, the maximum excess degrees are set for the excess degree; the maximum excess degrees correspond to respective reduction ratios set in a transmission included in the vehicle; the maximum excess degree becomes large as the reduction ratio becomes small; the control circuitry acquires a detection result from a gear position sensor that detects the reduction ratio that is being selected in the transmission; and the control circuitry determines the output power suppression amount by using the maximum excess degree corresponding to the reduction ratio that is being selected in the transmission.

According to the fourteenth aspect, the reduction ratio that is being selected in the transmission is related to the load received by the driving source. The output power suppression amount in the case of a low load corresponding to the low-speed side reduction ratio may become larger than the output power suppression amount in the case of a high load corresponding to the high-speed side reduction ratio. The control circuitry suppresses the output power of the driving source by the output power suppression amount that is larger in the case of the low load than in the case of the high load. Thus, the change in the output power of the driving source can be effectively suppressed.

The vehicle according to a fifteenth aspect of the present invention may be configured such that: in the thirteenth or fourteenth aspect, the maximum excess degrees are set for the excess degree; the maximum excess degrees are set so as to change in accordance with elements which are related to a load received by the driving source and include one or more of an attitude of the vehicle, a speed of the vehicle, an intake air temperature of the driving source, and intake pressure of the driving source; the control circuitry acquires information which is related to the load received by the driving source and includes one or more of information of the attitude of the vehicle, information of the speed of the vehicle, information of the intake air temperature of the driving source, and information of the intake pressure of the driving source; and the control circuitry determines the output power suppression amount by using the maximum excess degree corresponding to the acquired information.

According to the fifteenth aspect, the maximum excess degrees are set in accordance with the load received by the driving source. The control circuitry suppresses the output power of the driving source by the output power suppression amount corresponding to the load received by the driving source. Therefore, the change in the output power of the driving source may be effectively suppressed.

A control method according to a sixteenth aspect of the present invention is a method of controlling a rotational speed of a driving source of a vehicle, the method including: acquiring information of the rotational speed of the driving source; determining whether or not the rotational speed of the driving source has exceeded a preset upper threshold; and in response to determining that the rotational speed of the driving source has exceeded the upper threshold, executing suppression control that suppresses an output power of the driving source in comparison with before the rotational speed of the driving source exceeds the upper threshold, wherein in the suppression control, after the rotational speed of the driving source has exceeded the upper threshold, a suppression amount of the output power of the driving source is increased as an excess time period increases, the excess time period being a time period in which the rotational speed of the driving source has exceeded the upper threshold.

According to the sixteenth aspect, before the rotational speed of the driving source exceeds the upper threshold, the suppression amount of the output power of the driving source is smaller than that after the rotational speed of the driving source has exceeded the upper threshold, or the output power of the driving source is not suppressed, and the intention of the manipulation of the operator of the vehicle can be reflected in the operation of the driving source. Therefore, the driving feeling is easily improved. After the rotational speed of the driving source has exceeded the upper threshold, the output power suppression amount is set based on the excess time period. Thus, the occurrence of the hunting by the driving source can be suppressed as compared to when the output power of the driving source is suppressed based on the deviation of the rotational speed with respect to the upper threshold.

The control method according to a seventeenth aspect of the present invention may be configured such that: in the sixteenth aspect, the method include: in the suppression control, determining whether or not a reduction ratio that is being selected in a transmission included in the vehicle has been changed; and in response to determining that the reduction ratio that is being selected in the transmission has been changed, resetting the excess time period used to determine the output power suppression amount of the driving source.

According to the seventeenth aspect, the state where the reduction ratio is changed allows the change in the load acting on the driving source during the transient state of speed ratio shifting. Thus, stopping the suppression control that is being executed makes it possible to improve the operator's driving feeling.

Processing circuitry according to an eighteenth aspect of the present invention includes a processor and a memory, wherein: the memory stores information of a preset upper threshold of a rotational speed of a driving source of a vehicle; the processor performs to: acquire information of the rotational speed of the driving source; determine whether or not the rotational speed of the driving source has exceeded the upper threshold; and in response to the processor determining that the rotational speed of the driving source has exceeded the upper threshold, execute suppression control that suppresses an output power of the driving source in comparison with before the rotational speed of the driving source exceeds the upper threshold, wherein in the suppression control, the processor determines an excess degree related to an excess time period that is a time period in which the rotational speed of the driving source has exceeded the upper threshold, and outputs a command that makes the output power of the driving source suppressed in accordance with the determined excess degree more in comparison with before the suppression control.

According to the eighteenth aspect, the processing circuitry can achieve the same effects as the vehicles according to the aspects of the present invention.

The present invention may be a computer program that causes a computer to execute the control method according to the aspect of the present invention or the processing of the processing circuitry according to the aspect of the present invention. For example, a computer program according to a nineteenth aspect of the present invention causes a computer to execute: acquiring information of a rotational speed of a driving source of a vehicle; determining whether or not the rotational speed of the driving source has exceeded a preset upper threshold; and in response to determining that the rotational speed of the driving source has exceeded the upper threshold, executing suppression control that suppresses an output power of the driving source more in comparison with before the rotational speed of the driving source exceeds the upper threshold. In the suppression control, the computer program according to the eighteenth aspect of the present invention causes the computer to execute: determining an excess degree related to an excess time period that is a time period in which the rotational speed of the driving source has exceeded the upper threshold; and outputting a command that makes the output power of the driving source suppressed in accordance with the determined excess degree in comparison with before the suppression control.

Such computer program can achieve the same effects as the vehicle, the control method, and the processing circuitry according to the aspects of the present invention. For example, the computer program may be a program stored in a non-transitory, tangible computer-readable storage medium or may be configured to be retrieved from a storage medium by means of a drive device of the storage medium and installed into a computer. For example, the computer program may be a program that can be distributed through a transmission medium such as the Internet or may be configured to be downloaded and installed into a computer.

The functionality of the elements disclosed herein may be implemented using one or more circuitry or processing circuitry which includes general purpose processors, special purpose processors, integrated circuits, ASICs ("Application Specific Integrated Circuits"), FPGAs ("Field Programmable Gate Arrays") and/or conventional circuitry. The functionality of the elements disclosed herein may be implemented using one or more circuitry or processing circuitry which includes combinations of general purpose processors, special purpose processors, integrated circuits, ASICs, FPGAs, or conventional circuitry. The one or more circuitry or processing circuitry is programmed, using one or more programs stored together or individually in one or more memories, or otherwise configured to perform the disclosed functionality. Processors are considered processing circuitry or circuitry as they include transistors and other circuitry therein. The processor may be a programmed processor which executes a program stored in a memory. In the disclosure, the circuitry, units, or means are hardware that carry out or are programmed to perform the recited functionality, alone or in combination with one another. The hardware may be any hardware disclosed herein which is programmed or configured to carry out the recited functionality. There is a memory that stores a computer program which includes computer instructions. The computer instructions provide the logic and routines that enable the hardware to perform the method disclosed herein. The hardware includes, e.g., processing circuitry or circuitry. The computer program can be implemented in known formats as a computer-readable storage medium, a computer program product, a memory device, a record medium such as a CD-ROM or DVD, and/or the memory of a FPGAs or ASICs.

The numerals such as ordinal and cardinal numbers as used herein are all given as examples to describe the technology of the present invention in concrete terms and not intended to limit the present invention. The connection relationships between the elements are presented as examples to describe the technology of the present invention in concrete terms, and any other connection relationships may be employed to achieve the functionality taught in the present invention.

The scope of the present invention is defined by the appended claims rather than by the specification so that the present invention may be embodied in various forms without departing from the essential characteristics of the present invention. The exemplary embodiment and variants are meant to be illustrative only and not limiting as to the scope of the present invention. All changes which come within the meaning and range of equivalency of the claims are to be embraced within the scope of the claims.

### REFERENCE SIGN LIST

1: Vehicle, Motorcycle, 10; Driving source, 25:; Transmission, 30: Control circuitry, 40; Actuator, 41: Throttle actuator, 411: Throttle valve, 261; Rotation sensor.

## Claims

1. A vehicle (1) comprising:
a driving source (10);
a rotation sensor (261) that detects a rotational speed of the driving source (10);
control circuitry (30) configured to control the driving source (10); and
an actuator (40) that operates the driving source (10) in accordance with a command given from the control circuitry (30), wherein:
in response to the rotational speed of the driving source (10) exceeding a preset upper threshold, the control circuitry (30) executes suppression control that suppresses an outlet power of the driving source (10) in comparison with before the rotational speed of the driving source (10) exceeds the upper threshold; and
in the suppression control, the control circuitry (30) gives to the actuator (40) a command that makes the power of the driving source (10) suppressed in comparison with before the suppression control is executed, in accordance with an excess degree set in relation to an excess time period that is a time period in which the rotational speed of the driving source (10) has exceeded the upper threshold.

2. The vehicle (1) according to claim 1, wherein the control circuitry (30) cancels the execution of the suppression control based on a less-than time period that is a time period in which the rotational speed of the driving source (10) is less than the upper threshold.

3. The vehicle (1) according to claim 1 or 2, wherein:
in the suppression control, the control circuitry (30) increases an output power suppression amount of the driving source (10) as the excess time period increases; and
in the suppression control, the control circuitry (30) decreases the output power suppression amount of the driving source (10) as a less-than time period increases, the less-than time period being a time period in which the rotational speed of the driving source (10) is less than the upper threshold.

4. The vehicle (1) according to any one of claims 1 to 3, wherein in the suppression control, the control circuitry (30) decreases an output power suppression amount of the driving source (10) as the rotational speed of the driving source (10) decreases.

5. The vehicle (1) according to any one of claims 1 to 4, wherein in the suppression control, the control circuitry (30) decreases an output power suppression amount of the driving source (10) as a reduction ratio that is being selected in a transmission (25) included in the vehicle (1) becomes small.

6. The vehicle (1) according to any one of claims 1 to 5, wherein:
in the suppression control, the control circuitry (30) decreases an output power suppression amount of the driving source (10) as the rotational speed of the driving source (10) decreases; and
in the suppression control, the control circuitry (30) decreases the output power suppression amount of the driving source (10) as a reduction ratio that is being selected in a transmission (25) included in the vehicle (1) becomes small.

7. The vehicle (1) according to any one of claims 1 to 6, wherein in the suppression control, in response to the control circuitry (30) determining that a state different from a state of the rotational speed of the driving source (10) has satisfied a preset condition, the control circuitry (30) cancels the execution of the suppression control.

8. The vehicle (1) according to claim 7, wherein in the suppression control, in response to the control circuitry (30) determining that a reduction ratio that is being selected in a transmission (25) included in the vehicle (1) has been changed, the control circuitry (30) cancels the suppression control.

9. The vehicle (1) according to any one of claims 1 to 8, wherein:
the actuator (40) includes a throttle actuator (41) that drives a throttle valve (411) that adjusts a flow rate of air flowing into the driving source (10);
the control circuitry (30) sets a target throttle opening degree of the throttle valve (411) based on a torque command of a torque required of the driving source (10) in response to a command of a driving source operation input by an operator of the vehicle (1); and
in the suppression control, the control circuitry (30) corrects the target throttle opening degree such that the target throttle opening degree decreases as an output power suppression amount of the driving source (10) increases.

10. A method of controlling a rotational speed of a driving source (10) of a vehicle (1), the method comprising:
acquiring information of the rotational speed of the driving source (10);
determining whether or not the rotational speed of the driving source (10) has exceeded a preset upper threshold; and
in response to determining that the rotational speed of the driving source (10) has exceeded the upper threshold, executing suppression control that makes an outlet power of the driving source (10) suppressed in comparison with before the rotational speed of the driving source (10) exceeds the upper threshold, wherein
in the suppression control, after the rotational speed of the driving source (10) has exceeded the upper threshold, a suppression amount of the output power of the driving source (10) is increased as an excess time period increases, the excess time period being a time period in which the rotational speed of the driving source (10) has exceeded the upper threshold.

11. The method according to claim 10, comprising:
in the suppression control, determining whether or not a reduction ratio that is being selected in a transmission (25) included in the vehicle (1) has been changed; and
in response to determining that the reduction ratio that is being selected in the transmission (25) has been changed, resetting the excess time period used to determine the output power suppression amount of the driving source (10).
